(19) Europäisches Patentamt
European Patent Office
Office européen des brevets

(11) **EP 4 763 360 A1**

(12) **EUROPEAN PATENT APPLICATION**
published in accordance with Art. 153(4) EPC

(43) Date of publication:
24.06.2026 Bulletin 2026/26

(21) Application number: 24899147.3

(22) Date of filing: 22.05.2024

(51) International Patent Classification (IPC):
*B05C 13/02* (2006.01)    *B65H 23/032* (2006.01)
*B05C 11/10* (2006.01)    *B05C 9/14* (2006.01)
*B05C 9/04* (2006.01)

(52) Cooperative Patent Classification (CPC):
Y02E 60/10

(86) International application number:
PCT/CN2024/094770

(87) International publication number:
WO 2025/118495 (12.06.2025 Gazette 2025/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.12.2023 CN 202311656289

(71) Applicant: Contemporary Amperex Technology
Co., Limited
Ningde, Fujian 352100 (CN)

(72) Inventors:
• WU, Chunxu
  Ningde, Fujian 352100 (CN)
• JIANG, Ping
  Ningde, Fujian 352100 (CN)
• LU, Gaofeng
  Ningde, Fujian 352100 (CN)
• LI, Hongyuan
  Ningde, Fujian 352100 (CN)

(74) Representative: Kraus & Lederer PartGmbB
Thomas-Wimmer-Ring 15
80539 München (DE)

(54) **ELECTRODE SHEET COATING DEVIATION CORRECTION METHOD AND SYSTEM**

(57) An electrode sheet coating deviation correction method and system. The method comprises: acquiring coating images obtained by means of performing collection on two opposite coating surfaces of an electrode sheet; using the coating images to determine coating misalignment information, wherein the coating misalignment information represents misalignment states of coating areas on the coating surfaces, the coating misalignment information comprises first misalignment information, and the first misalignment information represents the state of misalignment between a coating area on a coating surface and a standard coating position in the coating surface; and on the basis of the coating misalignment information, performing deviation correction on at least two of coating mechanisms for the two coating surfaces and the electrode sheet, such that, after deviation correction, the coating areas on the two coating surfaces are aligned and are both located at standard coating positions in the coating surfaces.

FIG. 1

**Description**

CROSS-REFERENCE

The present application claims priority to Chinese Patent Application No. 2023116562898 entitled "METHOD AND SYSTEM FOR ELECTRODE PLATE COATING DEVIATION CORRECTION" and filed with the China National Intellectual Property Administration on December 5, 2023, the content of which is incorporated herein by reference in its entirety.

TECHNICAL FIELD

The present application relates to the technical field of batteries, and in particular, to a method and system for electrode plate coating deviation correction.

BACKGROUND

During the electrode plate coating procedure, when continuous coating is carried out, there is a shift of the electrode plate due to mechanical errors, guide roller errors, vibration, fluctuation in the tension of the electrode plate, and the like in the coating device, such that coatings on two surfaces of the electrode plate are misaligned during coating. The misaligned coatings on the two surfaces of the electrode plate may reduce the consistency of the cell capacity, resulting in an affected quality of the cell.
At present, deviation correction for electrode plate coating is often performed manually; the response speed of such a deviation correction method is slow. Additionally, the deviation correction effect is greatly affected by the experience and quality of the production personnel, such that the deviation correction effect is unstable.

SUMMARY

The present application at least provides a method and system for electrode plate coating deviation correction.
A first aspect of the present application provides a method for electrode plate coating deviation correction. The method includes: obtaining coating images acquired from two opposite coating surfaces of an electrode plate; determining, by using the coating images, coating misalignment information, where the coating misalignment information characterizes misalignment of coated regions on the coating surfaces, the coating misalignment information includes first misalignment information, and the first misalignment information characterizes misalignment between a coated region on one of the coating surfaces and a standard coating position on the coating surface; and performing, based on the coating misalignment information, deviation correction on at least two of coating mechanisms of the two coating surfaces and the electrode plate, so as to enable coated regions on the two coating surfaces after the deviation correction to be aligned and both locOKated at standard coating positions on the coating surfaces.
In the above solution, by performing the deviation correction in time based on the misalignment of the coated regions on the coating surfaces of the electrode plate to enable the coated regions on the two coating surfaces after the deviation correction to be aligned and both located at the standard coating positions on the coating surfaces, the quality of the electrode plate is ensured, thereby ensuring the capacity consistency, safety, and reliability of the cells subsequently manufactured based on this electrode plate. In addition, the misalignment of the coated regions on the two coating surfaces of the electrode plate is automatically determined based on the coating images, and the deviation correction based on the misalignment of the coated regions on the two coating surfaces is also automatically performed, both of which are performed without manual operation. That is, the above solution enables timely and automatic determination of the misalignment of the coated regions on the coating surfaces, and allows timely and automatic deviation correction based on the misalignment of the coated regions on the two coating surfaces, achieving a rapid response to the electrode plate coating deviation correction, providing high efficiency and high deviation correction accuracy, and reducing the burden on the worker.
In some embodiments, the coating misalignment information includes the first misalignment information and second misalignment information, or includes two pieces of the first misalignment information, where the second misalignment information characterizes misalignment between the coated regions on the two coating surfaces.
In the above solution, the coated regions on the two coating surfaces after the deviation correction can be aligned and both located at the standard coating positions on the coating surfaces in two deviation correction manners. In one manner, the misalignment between the coated regions on the two coating surfaces is corrected, and at the same time, the misalignment between the coated region on any one of the coating surfaces and the standard coating position on the corresponding coating surface is corrected. In the other manner, the misalignment between the coated region on one coating surface and the standard coating position on the corresponding coating surface is corrected, and at the same time, the misalignment between the coated region on the other coating surface and the standard coating position on the corresponding coating surface is corrected.

In some embodiments, there is at least one piece of coating misalignment information; performing, based on the coating misalignment information, the deviation correction on the at least two of the coating mechanisms of the two coating surfaces and the electrode plate includes: determining, based on each piece of the coating misalignment information, a respective deviation correction value corresponding to the piece of the coating misalignment information; and performing, by using the respective deviation correction value corresponding to the piece of the coating misalignment information, the deviation correction on the at least two of the coating mechanisms of the two coating surfaces and the electrode plate.

In the above solution, the deviation correction value can intuitively reflect the positional deviation. Therefore, by using the respective deviation correction value of each piece of coating misalignment information to perform deviation correction, the deviation correction can be performed more rapidly and accurately, thereby enhancing the deviation correction efficiency.

In some embodiments, the two coating surfaces include a first coating surface and a second coating surface, the coating misalignment information includes first misalignment information and second misalignment information, the first misalignment information characterizes misalignment between a coated region on the first coating surface and a standard coating position on the first coating surface, and the second misalignment information characterizes misalignment between the coated regions on the two coating surfaces; determining, based on each piece of the coating misalignment information, the respective deviation correction value corresponding to the piece of the coating misalignment information includes: determining, based on the first misalignment information, a first deviation correction value corresponding to the first misalignment information, and determining, based on the second misalignment information, a second deviation correction value corresponding to the second misalignment information; performing, by using the respective correction value corresponding to the piece of the coating misalignment information, the deviation correction on the at least two of the coating mechanisms of the two coating surfaces and the electrode plate includes: performing, according to the first deviation correction value, a first deviation correction on a first coating mechanism of the first coating surface, so as to enable a coated region on the first coating surface formed after the first deviation correction to be located at the standard coating position; and performing, by using the first deviation correction value and the second deviation correction value, a second deviation correction on a second coating mechanism of the second coating surface, so as to enable a coated region on the second coating surface formed after the second deviation correction to be located at the standard coating position and aligned with the coated region on the first coating surface.

In the above solution, the deviation correction degree, corresponding to the situation where the coated region on the first coating surface after deviation correction is enabled to be located at the standard coating position on the first coating surface, is determined based on the misalignment between the coated region on the first coating surface and the standard coating position on the first coating surface, and the deviation correction degree, corresponding to the situation where the coated regions on the two coating surfaces after deviation correction are enabled to be aligned, is determined based on the misalignment between the coated regions on the two coating surfaces. Therefore, after the subsequent deviation correction based on the first deviation correction value and the second deviation correction value, the coated region on the first coating surface after deviation correction is enabled to be located at the standard coating position on the first coating surface, and at the same time, the coated region on the second coating surface after deviation correction is enabled to be aligned with the coated region on the first coating surface and located at the standard coating position on the second coating surface.

In some embodiments, performing, by using the first deviation correction value and the second deviation correction value, the second deviation correction on the second coating mechanism of the second coating surface includes: before the first deviation correction is performed on the first coating mechanism of the first coating surface, performing, according to the second deviation correction value, a third deviation correction on the second coating mechanism, so as to enable a coated region on the first coating surface formed after the third deviation correction to be aligned with the coated region on the second coating surface; and performing, according to the first deviation correction value, a fourth deviation correction on the second coating mechanism, so as to enable a coated region on the second coating surface formed after the fourth deviation correction to be located at the standard coating position; or obtaining a sum of the first deviation correction value and the second deviation correction value as a third deviation correction value, and performing, according to the third deviation correction value, the second deviation correction on the second coating mechanism.

In the above solution, the second deviation correction value is used first to perform deviation correction on the second coating mechanism of the second coating surface, so as to enable the coated regions on the first coating surface and the second coating surface after the deviation correction to be aligned; then, the first deviation correction value is used to perform deviation correction on the first coating mechanism of the first coating surface, so as to enable the coated region on the first coating surface after the deviation correction to be located at the standard coating position. Since the coated regions on the first coating surface and the second coating surface need to be aligned, in the case that the coated regions on the first coating surface and the second coating surface are aligned, the second coating mechanism of the second coating surface also needs to experience the same degree of deviation correction by using the first deviation correction value, so as to ensure that the deviation correction degree for the second coating mechanism of the second coating surface is the same, and the coated regions on the first coating surface and the second coating surface remain aligned. Additionally, since the first coating surface after the deviation correction is located at the standard coating position, the coated region on the second coating surface aligned with the coated region on the first coating surface is also located at the standard coating position.

In some embodiments, the step of performing the fourth deviation correction on the second coating mechanism and the step of performing the first deviation correction on the first coating mechanism of the first coating surface are separately performed at an interval of a target time, and the target time is time required by movement of the electrode plate for a distance between the first coating mechanism and the second coating mechanism during coating.

In the above solution, in the case that the first deviation correction is performed on the first coating mechanism of the first coating surface, the deviation correction for the second coating mechanism of the second coating surface is performed after the electrode plate travels the distance between the first coating mechanism and the second coating mechanism.

In some embodiments, in the case that the first coating mechanism is disposed in front of the second coating mechanism, the step of performing the fourth deviation correction on the second coating mechanism is performed after the first deviation correction is performed on the first coating mechanism of the first coating surface; in the case that the first coating mechanism is disposed behind the second coating mechanism, the step of performing the fourth deviation correction on the second coating mechanism is performed before the first deviation correction is performed on the first coating mechanism of the first coating surface; and/or the coating images includes a coating image obtained by acquisition of the first coating surface by using a first image acquisition apparatus and a coating image obtained by acquisition of the second coating surface by using a second image acquisition apparatus, and the first misalignment information and the second misalignment information are obtained by analyzing a coating surface with a preset length in the coating images; acquisition of a coating image for determining next first misalignment information is performed after the electrode plate moves a second distance following the first deviation correction, and acquisition of a coating image for determining next second misalignment information is performed after the electrode plate moves a third distance following the third deviation correction. The second distance is a sum of the preset length and a distance by which the electrode plate moves from the first coating mechanism to the first image acquisition apparatus during the coating, and the third distance is a sum of the preset length and a distance by which the electrode plate moves from a target coating mechanism to a target image acquisition apparatus during the coating. The target coating mechanism is a coating mechanism of the first coating mechanism and the second coating mechanism, located at a rear position, and the target image acquisition apparatus is an image acquisition apparatus of the first image acquisition apparatus and the second image acquisition apparatus, located at a front position.

In the above solution, during the coating of the electrode plate, after the electrode plate moves from the first coating mechanism of the first coating surface to the sum of the distance from the first coating mechanism to the first image acquisition apparatus and the preset length, the coating image for determining the next first misalignment information is acquired, so as to start a new deviation correction for the first coating mechanism of the first coating surface. During the coating of the electrode plate, after the electrode plate moves from the target coating mechanism to the sum of the distance from the target coating mechanism to the target image acquisition apparatus and the preset length, the coating image for determining the next second misalignment information is acquired, so as to start a new deviation correction for the target coating mechanism.

In some embodiments, the first misalignment information includes a first misalignment value with respect to a first coated region in at least one first detection region arranged in a length direction of an electrode plate on the first coating surface, the first misalignment value characterizes a positional deviation between the first coated region and a standard coating position, and a number of the first misalignment values of each of the first detection regions is one or more; determining, based on the first misalignment information, the first deviation correction value corresponding to the first misalignment information includes: for each of the first detection regions, using a measure of central tendency of the first misalignment values of the first detection region as a first candidate deviation correction value of the first detection region; and statistically processing the first candidate deviation correction value of each of the first detection regions to obtain the first deviation correction value corresponding to the first misalignment information. The second misalignment information includes a second misalignment value of at least one region pair, each of the region pairs includes a second detection region of the first coating surface and a corresponding third detection region on the second coating surface, the second misalignment value characterizes a positional deviation between a second coated region in the second detection region and a second coated region in the third detection region, and a number of second misalignment values of each of the region pairs is one or more; determining, based on the second misalignment information, the second deviation correction value corresponding to the second misalignment information includes: for each of the region pairs, using a measure of central tendency of the second misalignment values of the region pair as a second candidate deviation correction value of the region pair; and statistically processing the second candidate deviation correction value of each of the region pairs to obtain the second deviation correction value corresponding to the second misalignment information.

In the above solution, the measure of central tendency of the first misalignment values of the first detection region is used as the first candidate deviation correction value of the first detection region; the first candidate deviation correction value can reflect the overall situation of the first misalignment values of the first detection region, such that the first deviation correction value determined based on the first candidate deviation correction value of the first detection region is more accurate. Additionally, the measure of central tendency of the second misalignment values of the region pair is used as the second candidate deviation correction value of the region pair; the second candidate deviation correction value can reflect the overall situation of the second misalignment values of the region pair, such that the second deviation correction value determined based on the second candidate deviation correction value of the region pair is more accurate.

In some embodiments, after determining, based on each piece of the coating misalignment information, the respective deviation correction value corresponding to the piece of the coating misalignment information, the method for electrode plate deviation correction further includes: for the respective deviation correction value corresponding to the piece of the coating misalignment information, performing an alarm-related operation in response to the deviation correction value being greater than an alarm threshold; and/or discarding the deviation correction value in response to the deviation correction value being less than a deviation correction lower limit value, where after the deviation correction value is discarded, corresponding deviation correction is not performed, and the alarm threshold is greater than the deviation correction lower limit value.

In the above solution, when the degree required for deviation correction is large, the alarm-related operation is performed, so as to inform the user in time that the current electrode plate coating misalignment is serious and the deviation correction cannot be automatically and successfully completed; when the degree required for deviation correction is small, the degree required for deviation correction can be ignored and the deviation correction is not performed, so as to reduce energy consumption.

In some embodiments, determining, by using the coating images, the coating misalignment information includes: determining, from the coating images, at least one first detection region, and obtaining a first positional deviation of a first coated region in each of the first detection regions as the first misalignment information, where the at least one first detection region is at least one region arranged in a length direction of the electrode plate on the coating surface, and the first positional deviation characterizes a deviation between the first coated region and a standard coating position on a corresponding coating surface; and determining, from the coating images, at least one second detection region and at least one corresponding third detection region, so as to form at least one region pair, and obtaining a second positional deviation of each of the region pairs as the second misalignment information, where each region pair includes a second detection region and a third detection region, the at least one second detection region is at least one region arranged in the length direction of the electrode plate on the first coating surface of the two coating surfaces, the at least one third detection region is at least one region arranged in the length direction of the electrode plate on a second coating surface of the two coating surfaces, and the second positional deviation characterizes a positional deviation between a second coated region in the second detection region and a third coated region in the second detection region in the region pair.

In the above solution, the first misalignment information is determined according to the positional deviations corresponding to the selected first detection regions on the first coating surface; that is, the first misalignment information is determined by comprehensively considering a plurality of first detection regions on the first coating surface, so the determined first misalignment information is more accurate. Additionally, the second misalignment information is determined according to the positional deviations corresponding to the selected region pairs; that is, the second misalignment information is determined by comprehensively considering a plurality of region pairs, so the determined second misalignment information is more accurate.

In some embodiments, obtaining the first positional deviation of the first coated region in each of the first detection regions as the first misalignment information includes: for each of the first detection regions, obtaining widths of first regions of interest on both sides of the first detection region, where the first detection region includes a plurality of first sub-regions arranged in a width direction of an electrode plate, each of the first regions of interest includes at least one adjacent first sub-region, and the at least one first sub-region includes an uncoated sub-region located at an edge of the first detection region; and obtaining half of a first width difference between the first regions of interest on both sides as the first misalignment value corresponding to the first detection region, or obtaining half of second width differences between current widths of two first regions of interest and corresponding standard widths as the first misalignment value corresponding to the first detection region.

In the above solution, the first misalignment value corresponding to the first detection region is determined by using the width of the first region of interest in the first detection region; that is, the first misalignment value corresponding to the first detection region is determined by using partial regions within the first detection region. The manner of determining the first misalignment value corresponding to the first detection region is simple, and the efficiency of determining the first misalignment value corresponding to the first detection region is enhanced.

In some embodiments, the step of obtaining the half of the first width difference between the first regions of interest on both sides as the first misalignment value corresponding to the first detection region is performed in a case that the electrode plate is configured to prepare a double-tab electrode plate; the step of obtaining the half of the second width differences between the current widths of the two first regions of interest and the corresponding standard widths as the first misalignment value corresponding to the first detection region is performed in a case that the electrode plate is configured to prepare a single-tab electrode plate.

In the above solution, for electrode plates with different numbers of tabs, the first misalignment value corresponding to the first detection region is determined in different manners. Thus, the determination of the first misalignment value corresponding to the first detection region is more flexible and accurate.

In some embodiments, before performing, based on the coating misalignment information, the deviation correction on the at least two of the coating mechanisms of the two coating surfaces and the electrode plate, the method for electrode plate deviation correction further includes: in a case that the misalignment value corresponding to the first detection region includes the half of the second width differences corresponding to the two first regions of interest in the first detection region, performing preset alarm processing in response to the two second width differences corresponding to the first detection region meeting an alarm condition, and discarding the second width differences corresponding to the first detection region, where the discarded second width differences are not used to determine a deviation correction value, and the alarm condition is that a sum of absolute values of the two second width differences corresponding to the first detection region is greater than a preset difference, and the widths of the first regions of interest on both sides of the first detection region are both less than the corresponding standard width or both greater than the corresponding standard width.

In the above solution, in the case that the two second width differences corresponding to the first detection region meets an alarm condition, preset alarm processing is performed, so as to inform the user in time that the current deviation correction is abnormal.

In some embodiments, obtaining the second positional deviation of each of the region pairs as the second misalignment information includes: for each of the region pairs, obtaining a third width difference between a second region of interest in the second detection region and a corresponding third region of interest in the third detection region in the region pair as a second misalignment value of the region pair, where the second detection region and the third detection region each include a plurality of second sub-regions arranged in a width direction of the electrode plate, the second region of interest and the third region of interest each include at least one adjacent second sub-region, and the at least one second sub-region includes an uncoated sub-region located at an edge of the second detection region or the third detection region.

In the above solution, the second misalignment information is determined based on the difference between the at least one pair of regions of interest in the region pair; that is, the second misalignment information is determined by using partial regions within the region pair, so the efficiency of determining the second misalignment information is higher.

In some embodiments, obtaining the third width difference between the second region of interest in the second detection region and the corresponding third region of interest in the third detection region in the region pair as the second misalignment value of the region pair includes: determining a plurality of second regions of interest in the second detection region and a corresponding plurality of third regions of interest in the third detection region, where the second regions of interest each include a different number of second sub-regions and each include a first edge sub-region, the first edge sub-region is an uncoated sub-region located at the edge of the second detection region, the third regions of interest each include a different number of second sub-regions and each include a second edge sub-region, the second edge sub-region is an uncoated sub-region located at the edge of the third detection region, and each of the second regions of interest and a corresponding third region of interest form a pair of regions of interest; and obtaining a third width difference of each of the pairs of regions of interest in the region pair as a misalignment value of the region pair.

In the above solution, the number of the regions of interest in the second detection region and the third detection region may be flexibly set, and the number and types of the sub-regions included in the regions of interest may be flexibly set.

In some embodiments, obtaining the coating images acquired from the two opposite coating surfaces of the electrode plate includes: obtaining a first coating image acquired from the first coating surface of the two coating surfaces, and obtaining a second coating image acquired from the first coating surface and a third coating image acquired from the second coating surface of the two coating surfaces, where the first coating image and the second coating image are acquired by a first image acquisition apparatus at a same time or different times, the third coating image is acquired by a second image acquisition apparatus, the first coating image is used to determine the first misalignment information, and the second coating image and the third coating image are used to determine the second misalignment information; before determining, by using the coating images, the coating misalignment information, the method further includes: aligning, by using a distance between the first image acquisition apparatus and the second image acquisition apparatus, the second coating image with the third coating image.

In the above solution, before the misalignment between the coated regions on the first coating surface and the second coating surface of the electrode plate is determined by using the second coating image and the third coating image, data alignment needs to be performed first, so as to avoid the misalignment of the determined coating misalignment information caused by the positional misalignment arrangement of the two image acquisition apparatuses.

A second aspect of the present application provides a coating system. The coating system includes an unwinding mechanism, a first coating mechanism, a second coating mechanism, a drying mechanism, a rewinding mechanism, and a visual detection system. The unwinding mechanism is configured to unwind an electrode plate. The first coating mechanism is configured to coat a first coating surface of the unwound electrode plate. The second coating mechanism is disposed behind the first coating mechanism and configured to coat a second coating surface of the electrode plate. The drying mechanism is configured to dry the electrode plate coated by the first coating mechanism and the second coating mechanism. The rewinding mechanism is configured to rewind the dried electrode plate. The visual detection system is capable of performing acquisition of two opposite coating surfaces of the electrode plate to obtain coating images, determining coating misalignment information by using the coating images, and performing deviation correction on at least two of the coating mechanisms of the two coating surfaces and the electrode plate based on the coating misalignment information, so as to enable coated regions on the two coating surfaces after the deviation correction to be aligned and both located at standard coating positions on the coating surfaces. The coating misalignment information includes first misalignment information, and the first misalignment information characterizes misalignment between a coated region on a coating surface and a standard coating position on the coating surface.

**In** some embodiments, the visual detection system includes a first image acquisition apparatus and a second image acquisition apparatus. The first image acquisition apparatus is configured to perform image acquisition on the first coating surface of the electrode plate, and the second image acquisition apparatus is configured to perform image acquisition on the second coating surface of the electrode plate.

In some embodiments, the coating system further includes a first deviation correcting mechanism and a second deviation correcting mechanism. The first deviation correcting mechanism is configured to perform deviation correction on the first coating mechanism of the first coating surface of the electrode plate, and the second deviation correcting mechanism is configured to perform deviation correction on the second coating mechanism of the second coating surface of the electrode plate.

It should be understood that both the foregoing general description and the following detailed description are exemplary and explanatory only and are not construed as limiting the present application.

BRIEF DESCRIPTION OF THE DRAWINGS

The drawings here are incorporated into the specification and constitute a part of the specification. These drawings illustrate embodiments consistent with the present application and are used in conjunction with the specification to illustrate the technical solutions of the present application.

FIG. 1 is a schematic flowchart of an embodiment of a method for electrode plate coating deviation correction according to the present application;

FIG. 2 is a schematic diagram of an embodiment of a coating image according to the present application;

FIG. 3 is a schematic diagram of another embodiment of a coating image according to the present application;

FIG. 4 is a schematic structural diagram of an embodiment of a coating system according to the present application;

FIG. 5 is a schematic diagram of an embodiment of a deviation correction mathematical model according to the present application;

FIG. 6 is a schematic flowchart of an embodiment of step S13 shown in FIG. 1;

FIG. 7 is a schematic diagram of another embodiment of a coating image according to the present application;

FIG. 8 is a schematic flowchart of an embodiment of obtaining first misalignment information according to the present application; and

FIG. 9 is a schematic diagram of another embodiment of a coating image according to the present application.

DETAILED DESCRIPTION

The solutions of the embodiments of the present application will be described in detail below with reference to the drawings in the specification.

In the following description, for the purpose of illustration rather than limitation, specific details such as specific system structures, interfaces, and technologies are proposed to facilitate a thorough understanding of the present application.

The term "and/or" herein is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/". In addition, "plurality of" herein indicates two or more than two. Furthermore, the term "at least one type" herein indicates any one of a plurality of types or a combination of at least two of the plurality of types. For example, including at least one of A, B, and C may indicate including any one or more elements selected from the set consisting of A, B, and C.

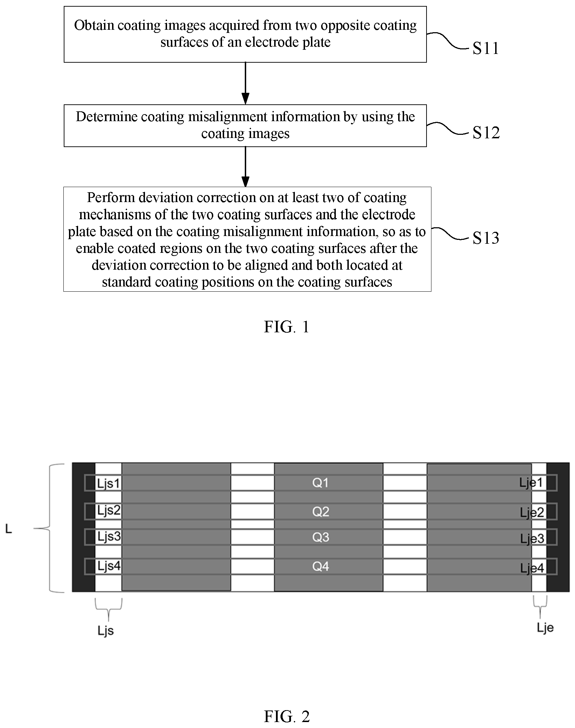

Referring to FIG. 1, FIG. 1 is a schematic flowchart of an embodiment of a method for electrode plate coating deviation correction according to the present application. It should be noted that if there are substantially the same results, the embodiments of the present application are not limited to the step sequence shown in FIG. 1. As shown in FIG. 1, the embodiments include:

In step S11, coating images acquired from two opposite coating surfaces of an electrode plate are obtained.

The method according to the embodiments is used for performing deviation correction on at least two of coating mechanisms of the two coating surfaces and the electrode plate, so as to enable coated regions on the two coating surfaces of the electrode plate after the deviation correction to be aligned and both located at standard coating positions on the coating surfaces, thereby ensuring the capacity consistency, safety, and reliability of the cells subsequently manufactured based on this electrode plate.

In the embodiments, the coating images acquired from the two opposite coating surfaces of the electrode plate are obtained. When the electrode plate is an aluminum foil current collector, the aluminum foil current collector is coated with a positive electrode material (e.g., LEP, NCM, etc.), and when the electrode plate is a copper foil current collector, the copper foil current collector is coated with a negative electrode material (e.g., graphite, LTO, etc.). The copper foil, as a negative electrode current collector of the battery, serves as a substrate for the negative electrode active material, and also serves as an electron collector and conductor for the negative electrode, which functions to collect the current generated by the battery active substance, so as to generate a larger output current. The aluminum foil, as a positive electrode current collector of the battery, serves as a substrate for the positive electrode active material, and the battery using the aluminum foil current collector has a strong charging and discharging capability and is not easy to be corroded by the electrolytic solution; the adhesion to the positive electrode active substance can be increased.

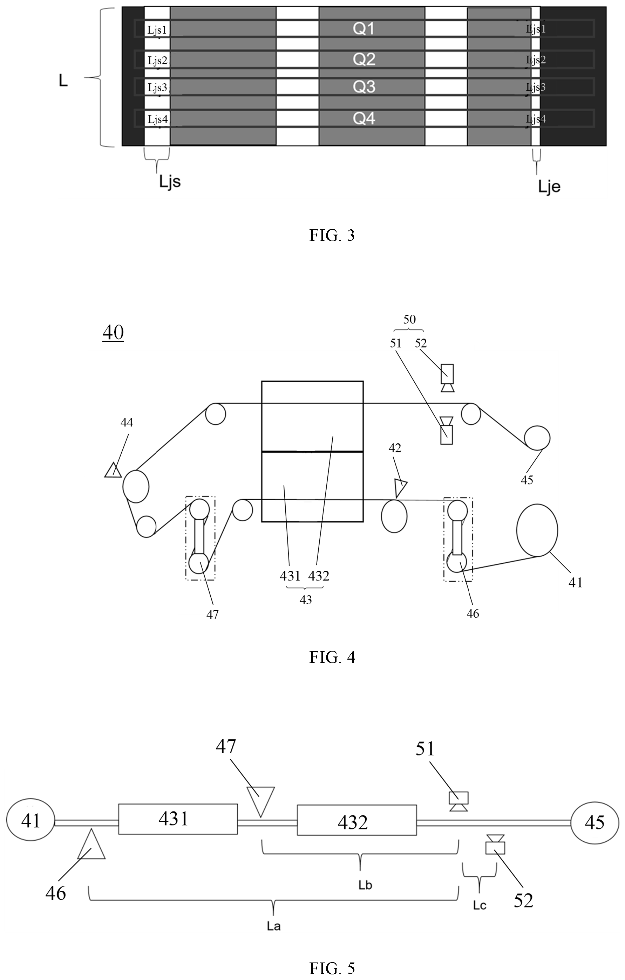

For example, as shown in FIGs. 2 and 3, FIG. 2 is a schematic diagram of an embodiment of a coating image according to the present application, and FIG. 3 is a schematic diagram of another embodiment of a coating image according to the present application. The coating image shown in FIG. 2 is obtained by acquisition of a coating surface of an electrode plate, and the electrode plate corresponding to FIG. 2 is configured to prepare a double-tab electrode plate. The coating image shown in FIG. 3 is obtained by acquisition of a coating surface of another electrode plate, and the electrode plate corresponding to FIG. 3 is configured to prepare a single-tab electrode plate. In FIGs. 2 and 3, white regions are uncoated sub-regions of the electrode plate, gray regions are coated regions, and black regions are roller regions.

In an embodiment, an image acquisition apparatus may be used to perform image acquisition on two coating surfaces of an electrode plate in real time to obtain coating images of the two opposite coating surfaces of the electrode plate. The image acquisition apparatus may be a CCD camera, etc., which is not limited herein. Certainly, in other embodiments, the coating images of the two opposite coating surfaces of the electrode plate may also be obtained from cloud storage or local storage, which is not specifically limited herein.

In a specific embodiment, as shown in FIG. 4, which is a schematic structural diagram of an embodiment of a coating system according to the present application, the coating system includes an unwinding mechanism, a first coating mechanism corresponding to one coating surface, a first drying mechanism corresponding to one coating surface, a second coating mechanism corresponding to the other coating surface, a second drying mechanism corresponding to the other coating surface, a first image acquisition apparatus, a second image acquisition apparatus, and a rewinding mechanism. The electrode plate is configured to be wound around the unwinding mechanism, sequentially passes through the first coating mechanism, the first drying mechanism, the second coating mechanism, and the second drying mechanism, and then is rewound by the rewinding mechanism. The first coating mechanism is configured to coat the first coating surface (one coating surface) of the electrode plate, so as to coat the first coating surface of the electrode plate with a positive electrode or negative electrode active material. The first drying mechanism is configured to dry the wet film on the first coating surface after coating. The second coating mechanism is configured to coat the second coating surface (the other coating surface) of the electrode plate, so as to coat the second coating surface of the electrode plate with the positive electrode or negative electrode active material. The second drying mechanism is configured to dry the wet film on the second coating surface after coating, such that the electrode plate is delivered from the second drying mechanism in a dry-film state, facilitating the rewinding of the rewinding mechanism, and thereby facilitating the subsequent winding operation of the cell.

After being delivered from the second drying mechanism, the electrode plate passes through the first image acquisition apparatus and the second image acquisition apparatus. The first image acquisition apparatus performs image acquisition on the first coating surface of the electrode plate, and the second image acquisition apparatus performs image acquisition on the second coating surface of the electrode plate, thereby obtaining the coating images of the two opposite coating surfaces of the electrode plate. That is to say, the first image acquisition apparatus and the second image acquisition apparatus are added to the coating system, and the coating and deviation correction of the electrode plate are integrated, such that the coating images of the two opposite coating surfaces of the electrode plate can be acquired in time after the coating process but before rewinding.

In step S12, coating misalignment information is determined by using the coating images.

In the embodiments, coating misalignment information is determined by using the coating images. The coating misalignment information includes first misalignment information, and the first misalignment information characterizes misalignment between a coated region on a coating surface and a standard coating position on the coating surface. Specifically, the coating images of the two opposite coating surfaces of the electrode plate are analyzed, so as to determine the misalignment of the coated regions on the coating surfaces.

In an embodiment, the coating misalignment information includes first misalignment information and second misalignment information. The first misalignment information characterizes misalignment between a coated region on a coating surface and a marked coating position on the coating surface, while the second misalignment information characterizes misalignment between coated regions on two coating surfaces. Subsequently, positional deviation correction of the coated region on the coating surface is performed based on the first misalignment information, such that the coating surface corresponding to the first misalignment information after the deviation correction is located at the standard coating position on the coating surface. Similarly, regional deviation correction of the coated regions on the two coating surfaces is performed based on the second misalignment information, such that the coated regions on the two coating surfaces after the deviation correction are aligned. Additionally, since the coating surface corresponding to the first misalignment information after the deviation correction is located at the standard coating position on the coating surface, the coated region on the other coating surface aligned with this coating surface after the deviation correction is naturally also located at the standard coating position on the corresponding coating surface. Therefore, the subsequent deviation correction performed based on the first misalignment information and the second misalignment information can enable the coated regions on the two coating surfaces after the deviation correction to be aligned and both located at the standard coating positions on the coating surfaces.

It should be noted that the two coating surfaces are opposite coating surfaces of the same electrode plate, so the standard coating positions corresponding to the coating surfaces are the same.

Since the standard coating positions on the two coating surfaces of the same electrode plate are the same, when the coated regions on the two coating surfaces are both located at the standard coating positions on the corresponding coating surfaces, the coated regions on the two coating surfaces are necessarily aligned and both located at the standard coating positions on the coating surfaces. Therefore, in other embodiments, the coating misalignment information includes two pieces of first misalignment information. One piece of first misalignment information characterizes misalignment between a coated region on one coating surface and a standard coating position on this coating surface, and the other piece of first misalignment information characterizes misalignment between a coated region on the other coating surface and a standard coating position on the other coating surface. Subsequently, positional deviation correction of the one coated region on the corresponding coating surface is performed based on the one piece of first misalignment information, such that the coated region corresponding to this first misalignment information after the deviation correction is located at the standard coating position on the corresponding coating surface. Similarly, positional deviation correction of the other coated region on the corresponding coating surface is performed based on the other piece of first misalignment information, such that the coated region corresponding to this first misalignment information after the deviation correction is located at the standard coating position on the corresponding coating surface. Therefore, the subsequent deviation correction performed based on the two pieces of first misalignment information can enable the coated regions on the two coating surfaces after the deviation correction to be aligned and both located at the standard coating positions on the coating surfaces.

In a specific embodiment, the two coating surfaces include a first coating surface and a second coating surface, the coating misalignment information includes first misalignment information and second misalignment information, the first misalignment information characterizes misalignment between a coated region on the first coating surface and a standard coating position on the first coating surface, and the second misalignment information characterizes misalignment between the coated regions on the two coating surfaces. In this case, obtaining the coating images acquired from the two opposite coating surfaces of the electrode plate is specifically as follows: obtaining a first coating image acquired from the first coating surface, and obtaining a second coating image acquired from the second coating surface and a third coating image acquired from the second coating surface. The first coating image and the second coating image are acquired by the first image acquisition apparatus at the same time or different times, and the third coating image is acquired by the second image acquisition apparatus. The first coating image is used to determine the first misalignment information, and the second coating image and the third coating image are used to determine the second misalignment information.

As shown in FIGs. 4 and 5, FIG. 5 is a schematic diagram of an embodiment of a deviation correction mathematical model according to the present application. Since the positions of the first image acquisition apparatus and the second image acquisition apparatus may be misaligned (i.e., not shooting at the same position), or in other words, even if the first image acquisition apparatus and the second image acquisition apparatus are shooting at the same position, there may be a small error between the positions. Therefore, in a specific embodiment, before the coating misalignment information is determined by using the coating images, the second coating image and the third coating image are aligned by using the distance between the first image acquisition apparatus and the second image acquisition apparatus; that is, before the misalignment between the coated regions on the first coating surface and the second coating surface of the electrode plate is determined by using the second coating image and the third coating image, data alignment needs to be performed first.

Specifically, assume that the positional difference between the shooting points of the first image acquisition apparatus and the second image acquisition apparatus on the electrode plate is Lc; then, the positional pixel difference between the second image acquisition apparatus and the first image acquisition apparatus is Np, and the second coating image and/or the first coating image is adjusted based on the positional pixel difference, so as to align the first coating image with the second coating image. The formula of the positional pixel difference Np is specifically as follows:

$$Np = Lc / p$$

where p denotes the longitudinal precision of the image acquisition apparatus, Lc denotes the positional difference, and Np denotes the positional pixel difference. For example, taking the positional pixel difference Np = 12,000 and the length of the coating image being 8,000 as an example, based on the positional pixel difference Np = 12,000 and the length of the coating image being 8,000, the nth line of the mth coating image acquired by the second image acquisition apparatus is calculated to be the (n+4000)th line of the (m+1)th coating image acquired by the first image acquisition apparatus.

In step S13, deviation correction is performed on at least two of the coating mechanisms of the two coating surfaces and the electrode plate based on the coating misalignment information, so as to enable the coated regions on the two coating surfaces after the deviation correction to be aligned and both located at the standard coating positions on the coating surfaces.

In the embodiments, deviation correction is performed on at least two of the coating mechanisms of the two coating surfaces and the electrode plate based on the coating misalignment information, so as to enable the coated regions on the two coating surfaces after the deviation correction to be aligned and both located at the standard coating positions on the coating surfaces. That is to say, the deviation correction is performed in time based on the misalignment of the coated regions on the coating surfaces of the electrode plate, so as to enable the coated regions on the two coating surfaces of the electrode plate to be aligned and both located at the standard coating positions on the coating surfaces. This ensures the quality of the electrode plate, and thereby ensures the capacity consistency, safety, and reliability of the cells subsequently manufactured based on the electrode plate. In addition, the misalignment of the coated regions on the two coating surfaces of the electrode plate is automatically determined based on the coating images, and the deviation correction based on the misalignment of the coated regions on the two coating surfaces is also automatically performed, both of which are performed without manual operation. That is, the method for electrode plate coating deviation correction according to the present application enables timely and accurate determination of the misalignment of the coated regions on the coating surfaces, and allows timely and accurate deviation correction based on the misalignment of the coated regions on the two coating surfaces, achieving a rapid response to the electrode plate coating deviation correction, providing high efficiency and high deviation correction accuracy, and reducing the burden on the worker.

It should be noted that the method for electrode plate coating deviation correction according to the present application is not limited to the situation where the deviation correction is necessarily performed on the coating mechanisms of two coating surfaces to enable the coated regions on the two coating surfaces after the deviation correction to be aligned and both located at the standard coating positions on the coating surfaces. For example, the situation may be that the deviation correction is performed on the coating mechanisms of two coating surfaces, respectively, or the deviation correction is performed on the coating mechanism of one coating surface and the electrode plate, or the deviation correction is performed on the coating mechanisms of the two coating surfaces and the electrode plate.

In addition, the coated regions on the two coating surfaces after deviation correction being enabled to be aligned and both located at the standard coating positions on the coating surfaces means that after two coating surfaces of a new substrate strip are subsequently coated by the corresponding coating mechanisms, the coated regions on the two coating surfaces are aligned and both located at the standard coating positions on the coating surfaces. That is to say, performing deviation correction on the at least two of the coating mechanisms of the two coating surfaces and the electrode plate is to prevent the subsequent coating of the electrode plate from misalignment; the coating condition for the electrode plate corresponding to the coating images cannot be further adjusted.

In an embodiment, as shown in FIG. 4, the coating system further includes a first deviation correcting mechanism and a second deviation correcting mechanism. The first deviation correcting mechanism is disposed between the unwinding mechanism and the first coating mechanism, and the second deviation correcting mechanism is disposed between the first drying mechanism and the second coating mechanism. The first deviation correcting mechanism can be used to perform deviation correction on the first coating mechanism and/or the electrode plate, and the second deviation correcting mechanism can be used to perform deviation correction on the second coating mechanism and/or the electrode plate.

In the above embodiments, the misalignment information is determined by using the coating images, and the deviation correction is performed on the at least two of the coating mechanisms of the two coating surfaces and the electrode plate based on the coating misalignment information, so as to enable the coated regions on the two coating surfaces after the deviation correction to be aligned and both located at the standard coating positions on the coating surfaces. Therefore, by performing deviation correction in time based on the misalignment of the coated regions on the coating surfaces of the electrode plate to enable the coated regions on the two coating surfaces after the deviation correction to be aligned and both located at the standard coating positions on the coating surfaces, the quality of the electrode plate is ensured, thereby ensuring the capacity consistency, safety, and reliability of the cells subsequently manufactured based on the electrode plate.

In addition, the misalignment of the coated regions on the two coating surfaces of the electrode plate is automatically determined based on the coating images, and the deviation correction based on the misalignment of the coated regions on the two coating surfaces is also automatically performed, both of which are performed without manual operation. That is, the above solutions enable automatic and timely determination of the misalignment of the coated regions on the coating surfaces, and allow automatic and timely deviation correction based on the misalignment of the coated regions on the two coating surfaces, achieving a rapid response to the electrode plate coating deviation correction, providing high efficiency and high deviation correction accuracy, and reducing the burden on the worker.

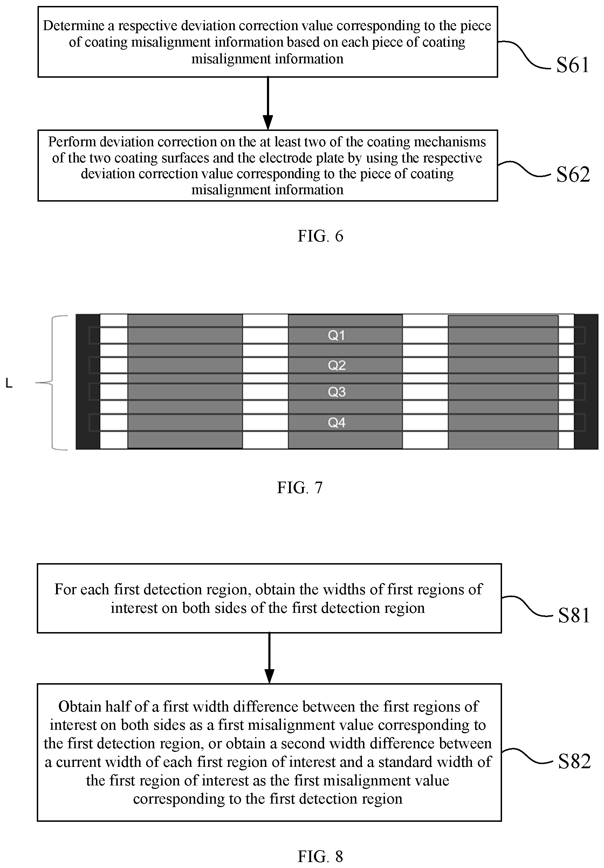

Referring to FIG. 6, FIG. 6 is a schematic flowchart of an embodiment of step S13 shown in FIG. 1. It should be noted that if there are substantially the same results, the embodiments of the present application are not limited to the step sequence shown in FIG. 6. As shown in FIG. 6, there is at least one piece of coating misalignment information, and the embodiments include:

In step S61, a respective deviation correction value corresponding to the piece of the coating misalignment information is determined based on each piece of the coating misalignment information.

In the embodiments, a respective deviation correction value corresponding to the piece of the coating misalignment information is determined based on each piece of the coating misalignment information. Since the coating misalignment information characterizes the misalignment of the coated region on the coating surface, the misalignment value of the coated region on the coating surface can be determined based on the coating misalignment information. The magnitude of the misalignment value can be understood as the degree of positional deviation of the coated region on the coating surface, that is, the degree required for deviation correction. Therefore, the misalignment value of the coated region on the coating surface is equivalent to the deviation correction value.

In an embodiment, the two coating surfaces include a first coating surface and a second coating surface, the coating misalignment information includes first misalignment information and second misalignment information, the first misalignment information characterizes misalignment between a coated region on the first coating surface and a standard coating position on the first coating surface, and the second misalignment information characterizes misalignment between coated regions on the two coating surfaces. In this case, determining a respective deviation correction value corresponding to the piece of coating misalignment information based on each piece of coating misalignment information is specifically as follows: determining a first deviation correction value corresponding to the first misalignment information based on the first misalignment information, and determining a second deviation correction value corresponding to the second misalignment information based on the second misalignment information. That is to say, the deviation correction degree, corresponding to the situation where the coated region on the first coating surface after deviation correction is enabled to be located at the standard coating position on the first coating surface, is determined based on the misalignment between the coated region on the first coating surface and the standard coating position on the first coating surface, and the deviation correction degree, corresponding to the situation where the coated regions on the two coating surfaces after deviation correction are enabled to be aligned, is determined based on the misalignment between the coated regions on the two coating surfaces.

It should be noted that deviation correction is subsequently performed based on the first deviation correction value, so as to enable the coated region on the first coating surface after the deviation correction to be located at the standard coating position on the first coating surface. Similarly, deviation correction is performed based on the second deviation correction value, so as to enable the coated regions on the two coating surfaces after the deviation correction to be aligned. Additionally, since the coated region on the first coating surface after the deviation correction is located at the standard coating position on the first coating surface, the coated region on the second coating surface aligned with the first coating surface after the deviation correction is naturally also located at the standard coating position on the second coating surface. Therefore, the subsequent deviation correction performed based on the first deviation correction value and the second deviation correction value can enable the coated regions on the two coating surfaces after the deviation correction to be aligned and both located at the standard coating positions on the coating surfaces.

In other embodiments, the two coating surfaces include a first coating surface and a second coating surface, the coating misalignment information includes first misalignment information corresponding to the first coating surface and first misalignment information corresponding to the second coating surface, the first misalignment information corresponding to the first coating surface characterizes misalignment between a coated region on the first coating surface and a standard coating position on the first coating surface, and the first misalignment information corresponding to the second coating surface characterizes misalignment between a coated region on the second coating surface and a marked coating position on the second coating surface. In this case, a first deviation correction value corresponding to the first coating surface is determined based on the first misalignment information corresponding to the first coating surface, and a first deviation correction value corresponding to the second coating surface is determined based on the first misalignment information corresponding to the second coating surface. That is to say, the deviation correction degree, corresponding to the situation where the coated region on the first coating surface after deviation correction is enabled to be located at the standard coating position on the first coating surface, is determined based on the misalignment between the coated region on the first coating surface and the standard coating position on the first coating surface, and the deviation correction degree, corresponding to the situation where the coated region on the second coating surface after deviation correction is enabled to be located at the standard coating position on the second coating surface, is determined based on the misalignment between the coated region on the second coating surface and the standard coating position on the second coating surface.

Subsequently, deviation correction is performed based on the first deviation correction value corresponding to the first coating surface, such that the coated region on the first coating surface after the deviation correction is located at the standard coating position on the first coating surface. Similarly, deviation correction is performed based on the first deviation correction value corresponding to the second coating surface, such that the coated region on the second coating surface after the deviation correction is located at the standard coating position on the second coating surface. Since the standard coating positions on the two coating surfaces of the same electrode plate are the same, when the coated regions on the two coating surfaces are both located at the standard coating positions on the corresponding coating surfaces, the coated regions on the two coating surfaces are necessarily aligned.

In a specific embodiment, the first misalignment information includes a first misalignment value with respect to a first coated region in at least one first detection region arranged in the length direction of the electrode plate on the first coating surface, the first misalignment value characterizes a positional deviation between the first coated region and the standard coating position, and the number of the first misalignment values of each first detection region is one or more. In this case, determining the first deviation correction value corresponding to the first misalignment information based on the first misalignment information is specifically as follows: for each first detection region, using a measure of central tendency of the first misalignment values of the first detection region as a first candidate deviation correction value of the first detection region; and statistically processing the first candidate deviation correction value of each first detection region to obtain the first deviation correction value corresponding to the first misalignment information. That is to say, at least one first detection region is selected on the first coating surface, and the first deviation correction value corresponding to the first misalignment information is determined based on the first misalignment value with respect to the first coated region in the selected at least one first detection region; that is, the first deviation correction value corresponding to the first misalignment information is determined according to the first candidate deviation correction values corresponding to the selected sub-regions on the first coating surface. The first deviation correction value is determined by comprehensively considering a plurality of regions on the first coating surface, so the determined first deviation correction value is more accurate.

The number of the first detection regions arranged in the length direction of the electrode plate on the first coating surface is not limited, and may be specifically set according to actual use requirements. For example, as shown in FIG. 7, which is a schematic diagram of another embodiment of a coating image according to the present application, the number of the first detection regions arranged in the length direction of the electrode plate on the first coating surface is 4 (i.e., first detection region Q1, first detection region Q2, first detection region Q3, and first detection region Q4 in FIG. 7). In addition, the number of the first misalignment values of each first detection region is not limited; for example, the number of the first misalignment values of each first detection region is 1, 2, 3, 5, 10, or the like. It should be noted that when the number of the first misalignment values of each first detection region is 1, the measure of central tendency of the first misalignment values of the first detection region is the first misalignment value of the first detection region itself; when the number of the first misalignment values of each first detection region is more than one, the measure of central tendency of the first misalignment values of the first detection region is an average value, a median, or the like of the first misalignment values of this first detection region.

In a specific embodiment, the measure of central tendency (e.g., average value, median, etc.) of the first candidate deviation correction values of the first detection regions may be used as the first deviation correction value corresponding to the first misalignment information. Certainly, in other specific embodiments, one first candidate deviation correction value randomly selected from the first candidate deviation correction values of the first detection regions may alternatively be used as the first deviation correction value corresponding to the first misalignment information.

For example, taking the first misalignment information including the first misalignment values with respect to the first coated region in 4 first detection regions arranged in the length direction of the electrode plate on the first coating surface and the number of the first misalignment values of each first detection region being 1 as an example, the first misalignment value a of the first detection region A, the first misalignment value b of the second detection region B, the first misalignment value c of the third detection region C, and the first misalignment value d of the fourth detection region D are used as the first candidate deviation correction values corresponding to the first detection regions, respectively, and the average value of the first candidate deviation correction values of the 4 first detection regions is used as the first deviation correction value corresponding to the first misalignment information; that is, the first deviation correction value corresponding to the first misalignment information = $(a + b + c + d)/4$.

In a specific embodiment, the second misalignment information includes a second misalignment value of at least one region pair, each region pair includes a second detection region of the first coating surface and a corresponding third detection region on the second coating surface, the second misalignment value characterizes a positional deviation between a second coated region in the second detection region and a second coated region in the third detection region, and the number of second misalignment values of each region pair is one or more. In this case, determining, based on the second misalignment information, the second deviation correction value corresponding to the second misalignment information is specifically as follows: for each region pair, using a measure of central tendency of the second misalignment values of the region pair as the second candidate deviation correction value of the region pair; and statistically processing the second candidate deviation correction values of region pairs to obtain the second deviation correction value corresponding to the second misalignment information.

The number of groups of region pairs is not limited, and may be specifically set according to actual use requirements. For example, the number of groups of region pairs is 5. In addition, the number of the second misalignment values of each region pair is not limited; for example, the number of the second misalignment values of each region pair is 1, 2, 3, 5, 10, or the like. It should be noted that when the number of the second misalignment values of each region pair is 1, the measure of central tendency of the second misalignment values of the region pair is the second misalignment value of the region pair itself; when the number of the second misalignment values of each region pair is more than one, the measure of central tendency of the second misalignment values of the region pair is an average value, a median, or the like of the second misalignment values of this region pair.

In a specific embodiment, the second deviation correction value corresponding to the second misalignment information can be obtained based on the measure of central tendency (e.g., average value, median, etc.) of the second candidate deviation correction values of the region pairs. Certainly, in other specific embodiments, one second candidate deviation correction value randomly selected from the second candidate deviation correction values of the region pairs may alternatively be used as the second deviation correction value corresponding to the second misalignment information.

When the degree required for deviation correction is excessively small, it indicates that the positional deviation between the coated region on the coating surface and the standard coating position is small and that the positional deviation between the coated regions on the two coating surfaces is small, which can be ignored, and there is no need to perform deviation correction at present, so as to reduce energy consumption. Therefore, in an embodiment, for the respective deviation correction value corresponding to the piece of misalignment information, in response to the deviation correction value being less than the deviation correction lower limit value, the deviation correction value is discarded. After the deviation correction value is discarded, the corresponding deviation correction is not performed. That is, when the degree required for deviation correction is small, the degree required for deviation correction can be ignored, and the deviation correction is not performed, so as to reduce energy consumption.

The magnitude of the deviation correction lower limit value is not limited, and may be specifically set according to actual use requirements.

When the degree required for deviation correction is excessively large, even if deviation correction is performed on at least two of the two coating surfaces and the electrode plate, the coated regions on the two coating surfaces after the deviation correction are unable to be corrected to be aligned and both located at the standard coating positions on the coating surfaces. That is, when the degree required for deviation correction is large, deviation correction is performed in vain, and energy consumption is increased. Therefore, in an embodiment, after the respective deviation correction value corresponding to the piece of coating misalignment information is determined based on the coating misalignment information, for the respective deviation correction value corresponding to the piece of coating misalignment information, in response to the deviation correction value being greater than an alarm threshold, an alarm-related operation is performed. That is, when the degree required for deviation correction is large, the alarm-related operation is performed, so as to inform the user in time that the current electrode plate coating misalignment is serious and the deviation correction cannot be automatically and successfully completed.

The alarm threshold is greater than the deviation correction lower limit value. The magnitude of the alarm threshold is not limited, and may be specifically set according to actual use requirements.

In step S62, deviation correction is performed on at least two of the coating mechanisms of the two coating surfaces and the electrode plate by using the respective deviation correction value corresponding to the piece of coating misalignment information.

In the embodiments, deviation correction is performed on at least two of the coating mechanisms of the two coating surfaces and the electrode plate by using the respective deviation correction value corresponding to the piece of coating misalignment information. That is to say, the respective deviation correction value corresponding to the piece of coating misalignment information is used to perform deviation correction on the at least two of the coating mechanisms of the two coating surfaces and the electrode plate, so as to eliminate the positional deviation of the coated regions on the coating surfaces, thereby enabling the coated regions on the two coating surfaces after deviation correction to be aligned and both located at the standard coating positions on the coating surfaces.

In an embodiment, the two coating surfaces include a first coating surface and a second coating surface, the coating misalignment information includes first misalignment information and second misalignment information, the first misalignment information characterizes misalignment between a coated region on the first coating surface and a standard coating position on the first coating surface, and the second misalignment information characterizes misalignment between the coated regions on the two coating surfaces. In this case, performing deviation correction on at least two of the coating mechanisms of the two coating surfaces and the electrode plate by using the respective deviation correction value corresponding to the piece of coating misalignment information is specifically as follows: performing a first deviation correction on a first coating mechanism of the first coating surface according to the first deviation correction value, so as to enable the coated region on the first coating surface formed after the first deviation correction to be located at the standard coating position; and performing a second deviation correction on a second coating mechanism of the second coating surface by using the first deviation correction value and the second deviation correction value, so as to enable the coated region on the second coating surface formed after the second deviation correction to be located at the standard coating position and aligned with the coated region on the first coating surface.

The first deviation correction value is determined based on the first misalignment information, and the first misalignment information characterizes the misalignment between the coated region on the first coating surface and the standard coating position on the first coating surface. Therefore, performing the first deviation correction on the first coating mechanism of the first coating surface by using the first deviation correction value can eliminate the misalignment between the coated region on the first coating surface and the standard coating position on the first coating surface, such that the coated region on the first coating surface formed after the first deviation correction is located at the standard coating position. The second deviation correction value is determined based on the second misalignment information, and the second misalignment information characterizes the misalignment between the coated regions on the two coating surfaces. Therefore, performing the second deviation correction on the second coating mechanism on the second coating surface by using the second deviation correction value can eliminate the misalignment between the coated regions on the first coating surface and the second coating surface, such that the second coating surface formed after the second deviation correction is aligned with the coated region on the first coating surface. Additionally, since the coated region on the first coating surface formed after the first deviation correction is located at the standard coating position, the coated region on the second coating surface aligned with the coated region on the first coating surface is also located at the standard coating position. Therefore, performing the second deviation correction on the second coating mechanism of the second coating surface by using the second deviation correction value can also enable the second coating surface formed after the second deviation correction to be located at the standard coating position.

In a specific embodiment, performing the second deviation correction on the second coating mechanism of the second coating surface by using the first deviation correction value and the second deviation correction value is specifically as follows: before the first deviation correction is performed on the first coating mechanism of the first coating surface, performing a third deviation correction on the second coating mechanism according to the second deviation correction value, so as to enable the coated region on the first coating surface formed after the third deviation correction to be aligned with the coated region on the second coating surface; and performing a fourth deviation correction on the second coating mechanism according to the first deviation correction value, so as to enable the coated region on the second coating surface formed after the fourth deviation correction to be located at the standard coating position. That is to say, the second deviation correction value is used first to perform deviation correction on the second coating mechanism of the second coating surface, so as to enable the coated regions on the first coating surface and the second coating surface after the deviation correction to be aligned; then, the first deviation correction value is used to perform deviation correction on the first coating mechanism of the first coating surface, so as to enable the coated region on the first coating surface after the deviation correction to be located at the standard coating position. Since the coated regions on the first coating surface and the second coating surface need to be aligned, in the case that the coated regions on the first coating surface and the second coating surface are aligned, the second coating mechanism of the second coating surface also needs to experience the same degree of deviation correction by using the first deviation correction value, so as to ensure that the deviation correction degree for the second coating mechanism of the second coating surface is the same, and the coated regions on the first coating surface and the second coating surface remain aligned. Additionally, since the first coating surface after the deviation correction is located at the standard coating position, the coated region on the second coating surface aligned with the coated region on the first coating surface is also located at the standard coating position.

That is to say, the deviation correction sequence is: performing deviation correction on the second coating mechanism of the second coating surface, so as to enable the coated region on the first coating surface formed after the deviation correction to be aligned with the coated region on the second coating surface; performing deviation correction on the first coating mechanism on the first coating surface, so as to enable the coated region on the first coating surface formed after the deviation correction to be located at the standard coating position; and performing deviation correction on the second coating mechanism on the second coating surface, so as to enable the coated region on the second coating surface formed after the deviation correction to remain aligned with the coated region on the first coating surface and to be located at the standard coating position.

In other specific embodiments, performing the second deviation correction on the second coating mechanism of the second coating surface by using the first deviation correction value and the second deviation correction value is specifically as follows: obtaining a sum of the first deviation correction value and the second deviation correction value as a third deviation correction value, and performing deviation correction on the second coating mechanism according to the third deviation correction value. In the case that the deviation correction value corresponding to deviation correction in a certain direction is specified to be a positive number, the deviation correction value corresponding to deviation correction in the opposite direction is a negative number. Therefore, based on the third deviation correction value obtained from the sum of the first deviation correction value and the second deviation correction value, the deviation correction direction and the deviation correction degree for the second coating mechanism of the second coating surface can be determined.

In other embodiments, the two coating surfaces include a first coating surface and a second coating surface, the coating misalignment information includes first misalignment information and second misalignment information, the first misalignment information characterizes misalignment between a coated region on the first coating surface and a standard coating position on the first coating surface, and the second misalignment information characterizes misalignment between the coated regions on the two coating surfaces. In this case, performing deviation correction on at least two of the coating mechanisms of the two coating surfaces and the electrode plate by using the respective deviation correction value corresponding to the piece of coating misalignment information is specifically as follows: performing a first deviation correction on the electrode plate substrate according to the first deviation correction value, so as to enable the coated region on the first coating surface formed after the first deviation correction to be located at the standard coating position; and performing a second deviation correction on the electrode plate substrate by using the first deviation correction value and the second deviation correction value, so as to enable the coated region on the second coating surface formed after the second deviation correction to be located at the standard coating position and aligned with the coated region on the first coating surface.

In other embodiments, the two coating surfaces include a first coating surface and a second coating surface, the coating misalignment information includes first misalignment information corresponding to the first coating surface and first misalignment information corresponding to the second coating surface, the first misalignment information corresponding to the first coating surface characterizes misalignment between a coated region on the first coating surface and a standard coating position on the first coating surface, and the first misalignment information corresponding to the second coating surface characterizes misalignment between a coated region on the second coating surface and a standard coating position on the second coating surface. In this case, performing deviation correction on at least two of the coating mechanisms of the two coating surfaces and the electrode plate by using the respective deviation correction value corresponding to the piece of coating misalignment information is specifically as follows: performing a first deviation correction on the first coating mechanism of the first coating surface according to the first deviation correction value corresponding to the first coating surface, so as to enable the coated region on the first coating surface formed after the first deviation correction to be located at the standard coating position; and performing a first deviation correction on the second coating mechanism of the second coating surface according to the first deviation correction value corresponding to the second coating surface, so as to enable the coated region on the second coating surface formed after the first deviation correction to be located at the standard coating position. That is to say, the deviation correction degree, corresponding to the situation where the coated region on the first coating surface after deviation correction is enabled to be located at the standard coating position on the first coating surface, is determined based on the misalignment between the coated region on the first coating surface and the standard coating position on the first coating surface, and the deviation correction degree, corresponding to the situation where the coated region on the second coating surface after deviation correction is enabled to be located at the standard coating position on the second coating surface, is determined based on the misalignment between the coated region on the second coating surface and the standard coating position on the second coating surface.

Performing the first deviation correction based on the first deviation correction value corresponding to the first coating surface enables the coated region on the first coating surface formed after the first deviation correction to be located at the standard coating position on the first coating surface. Similarly, the first deviation correction is performed based on the first deviation correction value corresponding to the second coating surface, which enables the coated region on the second coating surface formed after the first deviation correction to be located at the standard coating position on the second coating surface. Since the standard coating positions on the two coating surfaces of the same electrode plate are the same, when the coated regions on the two coating surfaces are both located at the standard coating positions on the corresponding coating surfaces, the coated regions on the two coating surfaces are necessarily aligned.

In a specific embodiment, the step of performing the fourth deviation correction on the second coating mechanism of the second coating surface and the step of performing the first deviation correction on the first coating mechanism of the first coating surface are separately performed at an interval of a target time, and the target time is the time required by the movement of the electrode plate for the distance between the first coating mechanism and the second coating mechanism during coating. That is to say, in the case that the first deviation correction is performed on the first coating mechanism of the first coating surface, the deviation correction for the second coating mechanism of the second coating surface is performed after the electrode plate travels the distance between the first coating mechanism and the second coating mechanism.

For example, as shown in FIG. 5, in the case that deviation correction is performed on the first coating mechanism of the first coating surface, the deviation correction for the second coating mechanism of the second coating surface is performed after the electrode plate travels the distance of La - Lb.

In a specific embodiment, in the case that the first coating mechanism is disposed in front of the second coating mechanism, the step of performing the fourth deviation correction on the second coating mechanism is performed after the first deviation correction is performed on the first coating mechanism of the first coating surface; in the case that the first coating mechanism is disposed behind the second coating mechanism, the step of performing the fourth deviation correction on the second coating mechanism is performed before the first deviation correction is performed on the first coating mechanism of the first coating surface.

In a specific embodiment, the coating images include a coating image obtained by acquisition of the first coating surface by using a first image acquisition apparatus and a coating image obtained by acquisition of the second coating surface by using a second image acquisition apparatus, and the first misalignment information and the second misalignment information are obtained by analyzing a coating surface with a preset length in the coating images. The acquisition of a coating image for determining the next first misalignment information is performed after the electrode plate moves a second distance following the first deviation correction, and the acquisition of a coating image for determining the next second misalignment information is performed after the electrode plate moves a third distance following the third deviation correction. The second distance is a sum of the preset length and a distance by which the electrode plate moves from the first coating mechanism to the first image acquisition apparatus during the coating, and the third distance is a sum of the preset length and a distance by which the electrode plate moves from a target coating mechanism to a target image acquisition apparatus during the coating. The target coating mechanism is a coating mechanism of the first coating mechanism and the second coating mechanism, located at the rear position, and the target image acquisition apparatus is an image acquisition apparatus of the first image acquisition apparatus and the second image acquisition apparatus, located at the front position. The magnitude of the preset length is not limited, and may be specifically set according to actual use requirements.

That is to say, during the coating of the electrode plate, after the electrode plate moves from the first coating mechanism of the first coating surface to the sum of the distance from the first coating mechanism to the first image acquisition apparatus and the preset length, the coating image for determining the next first misalignment information is acquired, so as to start a new deviation correction for the first coating mechanism of the first coating surface. During the coating of the electrode plate, after the electrode plate moves from the target coating mechanism to the sum of the distance from the target coating mechanism to the target image acquisition apparatus and the preset length, the coating image for determining the next second misalignment information is acquired, so as to start a new deviation correction for the target coating mechanism.

It should be noted that the rear position refers to a position proximal to the rewinding mechanism of the coating system, and the front position refers to a position distal to the rewinding mechanism of the coating system; that is, the target coating mechanism is the coating mechanism, of the first coating mechanism and the second coating mechanism, disposed proximal to the rewinding mechanism, and the target image acquisition apparatus is the image acquisition apparatus, of the first image acquisition apparatus and the second image acquisition apparatus, disposed distal to the rewinding mechanism.

In an embodiment, determining coating information by using the coating images is specifically as follows: determining, from the coating images, at least one first detection region, and obtaining a first positional deviation of a first coated region in each first detection region as the first misalignment information. The at least one first detection region is at least one region arranged in the length direction of the electrode plate on the coating surface, and the first positional deviation characterizes a deviation between the first coated region and the standard coating position on a corresponding coating surface.

The number of the first detection regions determined from the coating images is not limited, and may be specifically set according to actual use requirements. For example, as shown in FIG. 2, 4 first detection regions are determined from the coating images. In addition, the first detection region may be a plurality of first detection regions selected at equal intervals from the coating images, or may alternatively be a plurality of first detection regions randomly selected from the coating images.

In a specific embodiment, as shown in FIG. 8, which is a schematic flowchart of an embodiment of obtaining first misalignment information according to the present application, obtaining the first positional deviation of the first coated region in each first detection region as the first misalignment information specifically includes the following sub-steps:

In step S81, for each first detection region, the widths of first regions of interest on both sides of the first detection region are obtained.

In the embodiments, for each first detection region, the widths of first regions of interest on both sides of the first detection region are obtained. The first detection region includes a plurality of first sub-regions arranged in the width direction of the electrode plate, each first region of interest includes at least one adjacent first sub-region, and the at least one first sub-region includes an uncoated sub-region located at an edge of the first detection region.

Optionally, the first region of interest may include only an uncoated sub-region located at an edge of the first detection region, and the first region of interest may alternatively include an uncoated sub-region located at an edge of the first detection region and a first sub-region (coated sub-region) adjacent to the uncoated sub-region located at the edge of the first detection region.

For example, as shown in FIG. 2, taking 4 first detection regions being determined from the coating images and the first region of interest in the first detection region only including an uncoated sub-region at an edge of the first detection region as an example, the widths of the first regions of interest on both sides of the first detection region Q1 are Ljs1 and Lje1, respectively, the widths of the first regions of interest on both sides of the first detection region Q2 are Ljs2 and Lje2, respectively, the widths of the first regions of interest on both sides of the first detection region Q3 are Ljs3 and Lje3, respectively, and the widths of the first regions of interest on both sides of the first detection region Q4 are Ljs4 and Lje4, respectively.

In step S82, half of a first width difference between the first regions of interest on both sides is obtained as a first misalignment value corresponding to the first detection region, or a second width difference between a current width of each first region of interest and a standard width of the first region of interest is obtained as the first misalignment value corresponding to the first detection region.

In the embodiments, half of a first width difference between the first regions of interest on both sides is obtained as a first misalignment value corresponding to the first detection region, or half of second width differences between current widths of two first regions of interest and standard widths of corresponding regions is obtained as the first misalignment value corresponding to the first detection region. That is to say, the first misalignment value corresponding to the first detection region is determined by using the widths of the two first regions of interest in the first detection region.

In an embodiment, the step of obtaining the half of the first width difference between the first regions of interest on both sides as the first misalignment value corresponding to the first detection region is performed in the case that the electrode plate is configured to prepare a double-tab electrode plate. That is to say, in the case that the electrode plate is configured to prepare a double-tab electrode plate, by comparing the width difference between the first regions of interest on both sides of the first detection region, the deviation between the first coated region of the first detection region and the standard coating position on the corresponding coating surface can be determined; additionally, through the width deviation amount between the first regions of interest on both sides of the first detection region, the deviation amount between the first coated region of the first detection region and the standard coating position on the corresponding coating surface can be determined.

Specifically, as shown in FIG. 2, a plurality of first detection regions Q1, Q2, Q3, and Q4 are selected at equal intervals on a coating with a length of L; the widths of two first regions of interest in the first detection region Q1 are denoted as Ljs1 and Lje1, respectively, the widths of two first regions of interest in the first detection region Q2 are denoted as Ljs2 and Lje2, respectively, the widths of two first regions of interest in the first detection region Q3 are denoted as Ljs3 and Lje3, respectively, and the widths of two first regions of interest in the first detection region Q4 are denoted as Ljs4 and Lje4, respectively. Half of the first width difference between two first regions of interest is calculated as the first misalignment value Xj corresponding to the first detection region; specifically, the first misalignment value Xj1, corresponding to the first detection region Q1, = (Ljs1 - Lje1)/2, the first misalignment value Xj2, corresponding to the first detection region Q2, = (Ljs2 - Lje2)/2, the first misalignment value Xj3, corresponding to the first detection region Q3, = (Ljs3 - Lje3)/2, and the first misalignment value Xj4, corresponding to the first detection region Q4, = (Ljs4 - Lje4)/2.

In an embodiment, the step of obtaining the half of the second width differences between two first regions of interest and the corresponding standard widths as the first misalignment value corresponding to the first detection region is performed in the case that the electrode plate is configured to prepare a single-tab electrode plate or a double-tab electrode plate. That is to say, in the case that the electrode plate is configured to prepare a single-tab electrode plate or a double-tab electrode plate, by comparing the width difference between the width of the first region of interest of the first detection region and the standard width, the deviation between the first coated region of the first detection region and the standard coating position on the corresponding coating surface can be determined; additionally, through the width deviation amount between the width of the first region of interest of the first detection region and the standard width, the deviation amount between the first coated region of the first detection region and the standard coating position on the corresponding coating surface can be determined.

Specifically, as shown in FIG. 3, the step of obtaining the half of the second width differences between the two first regions of interest and the corresponding standard widths as the first misalignment value corresponding to the first detection region being performed in the case that the electrode plate is configured to prepare a single-tab electrode plate is taken as an example for description. A plurality of first detection regions Q1, Q2, Q3, and Q4 are selected at equal intervals on a coating with a length L; the widths of two first regions of interest in the first detection region Q1 are denoted as Ljs1 and Lje1, respectively, the widths of two first regions of interest in the first detection region Q2 are denoted as Ljs2 and Lje2, respectively, the widths of two first regions of interest in the first detection region Q3 are denoted as Ljs3 and Lje3, respectively, and the widths of two first regions of interest in the first detection region Q4 are denoted as Ljs4 and Lje4, respectively; the standard width corresponding to the first region of interest located at the left edge of the first detection region is denoted as SL, and the standard width corresponding to the first region of interest located at the right edge of the first detection region is denoted as Sr.

For each first detection region, a width difference Ls between the left first region of interest and the corresponding standard width is calculated, where Ls = Ljs - SL; at the same time, a width difference Le between the right first region of interest and the corresponding standard width is calculated, where Le = Lje - Sr; then, half of the sum of the width difference Ls and the width difference Le is used as the first misalignment value Xj corresponding to the first detection region, where Xj = (Le + Ls)/2.

The magnitude of the standard widths corresponding to the first regions of interest is not limited, and may be specifically set according to actual use requirements.

In an embodiment, before deviation correction is performed on at least two of the coating mechanisms of the two coating surfaces and the electrode plate based on the coating misalignment information, in the case that the misalignment value corresponding to the first detection region includes the half of the second width differences corresponding to two first regions of interest in the first detection region, in response to the two second width differences corresponding to the first detection region meeting an alarm condition, preset alarm processing is performed, and the second width differences corresponding to the first detection region are discarded, where the discarded second width differences are not used to determine the deviation correction value, and the alarm condition is that the sum of the absolute values of two second width differences corresponding to the first detection region is greater than a preset difference, and the widths of the first regions of interest on both sides of the first detection region are both less than the corresponding standard width or both greater than the corresponding standard width.

That is to say, in the case that the sum of the absolute values of the two width differences corresponding to the first detection region is greater than the preset difference, and the widths of the first regions of interest on both sides of the first detection region are both less than the corresponding standard width or both greater than the corresponding standard width, it indicates that the second width differences corresponding to the first detection region are abnormal, and if the second width differences are subsequently used to determine the deviation correction value, the subsequent determined deviation correction value is abnormal, resulting in subsequent deviation correction performed based on the deviation correction value being incorrect. In addition, preset alarm processing is performed when the alarm condition is not met, so as to inform the user in time that the currently determined first misalignment information is incorrect.

The magnitude of the preset difference is not limited, and may be specifically set according to actual use requirements. In addition, the form of the preset alarm processing is not limited. For example, the preset alarm processing is sending an alarm, shutting down, or the like.

Further, in the case that the half of the first width difference between the first regions of interest on both sides is obtained as the first misalignment value corresponding to the first detection region, the measure of central tendency of the first misalignment values corresponding to the first detection regions may be used as the first misalignment information. For example, the median of the first misalignment values corresponding to the first detection regions may be used as the first misalignment information.

In the case that the second width difference between the current width of each first region of interest and the standard width of the first region of interest is obtained as the first misalignment value corresponding to the first detection region, the measure of central tendency of the first misalignment values corresponding to the first detection regions may be used as the first misalignment information. For example, the average value of the first misalignment values corresponding to the first detection regions may be used as the first misalignment information.

In an embodiment, determining coating information by using the coating images is specifically as follows: determining, from the coating images, at least one second detection region and at least one corresponding third detection region, so as to form at least one region pair, and obtaining a second positional deviation of each region pair as the second misalignment information. Each region pair includes a second detection region and a third detection region, the at least one second detection region is at least one region arranged in the length direction of the electrode plate on the first coating surface, the at least one third detection region is at least one region arranged in the length direction of the electrode plate on the second coating surface, and the second positional deviation characterizes a positional deviation between a second coated region in the second detection region and a third coated region in the second detection region in the region pair. That is to say, the second misalignment information is determined according to the second positional deviations corresponding to the selected region pairs; that is, the second misalignment information is determined by comprehensively considering a plurality of region pairs, so the determined second misalignment information is more accurate.

The number of groups of region pairs determined from the coating images is not limited, and may be specifically set according to actual use requirements. For example, the number of groups of region pairs is 4.

In a specific embodiment, obtaining a third width difference between a second region of interest in the second detection region and a corresponding third region of interest in the third detection region in the region pair as the second misalignment value of the region pair is specifically as follows: determining a plurality of second regions of interest in the second detection region and a plurality of corresponding third regions of interest in the third detection region. The second regions of interest each include a different number of second sub-regions and each include a first edge sub-region, the first edge sub-region is an uncoated sub-region located at an edge of the second detection region, the third regions of interest each include a different number of second sub-regions and each include a second edge sub-region, the second edge sub-region is an uncoated sub-region located at an edge of the third detection region, and each second region of interest and a corresponding third region of interest form a pair of regions of interest; and obtaining a third width difference of each pair of regions of interest in the region pair as the misalignment value of the region pair.

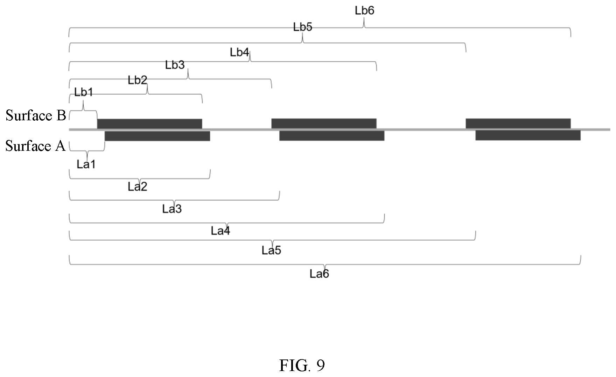

For example, as shown in FIG. 9, which is a schematic diagram of another embodiment of a coating image according to the present application, 6 second regions of interest in the second detection region are determined, which are, from left to right, a second region of interest a1, a second region of interest a2, a second region of interest a3, a second region of interest a4, a second region of interest a5, and a second region of interest a6 in sequence. The second region of interest a1 includes one second sub-region, and the included second sub-region is an uncoated sub-region located at an edge of the second detection region. The second region of interest a2 includes two second sub-regions, and from left to rear, the two second sub-regions are a first edge sub-region and a coated sub-region in sequence. The second region of interest a3 includes three second sub-regions, and from left to right, the three second sub-regions are the first edge sub-region, the coated sub-region, and an uncoated sub-region in sequence. The second region of interest a4 includes four second sub-regions, and from left to right, the four second sub-regions are the first edge sub-region, the coated sub-region, the uncoated sub-region, and a coated sub-region in sequence. The second region of interest a5 includes five second sub-regions, and from left to right, the five second sub-regions are the first edge sub-region, the coated sub-region, the uncoated sub-region, the coated sub-region, and an uncoated sub-region in sequence. The second region of interest a6 includes six second sub-regions, and from left to right, the six second sub-regions are the first edge sub-region, the coated sub-region, the uncoated sub-region, the coated sub-region, the uncoated sub-region, and a coated sub-region in sequence.

6 third regions of interest in the third detection region are determined, which are, from left to right, a third region of interest b1, a third region of interest b2, a third region of interest b3, a third region of interest b4, a third region of interest b5, and a third region of interest b6. The third region of interest b1 includes one third sub-region, and the included third sub-region is an uncoated sub-region located at an edge of the third detection region. The third region of interest b2 includes two third sub-regions, and from left to rear, the two third sub-regions are a second edge sub-region and a coated sub-region in sequence. The third region of interest b3 includes three third sub-regions, and from left to right, the three third sub-regions are the second edge sub-region, the coated sub-region, and an uncoated sub-region in sequence. The third region of interest b4 includes four third sub-regions, and from left to right, the four third sub-regions are the second edge sub-region, the coated sub-region, the uncoated sub-region, and a coated sub-region in sequence. The third region of interest b5 includes five third sub-regions, and from left to right, the five third sub-regions are the second edge sub-region, the coated sub-region, the uncoated sub-region, the coated sub-region, and an uncoated sub-region in sequence. The third region of interest b6 includes six third sub-regions, and from left to right, the six third sub-regions are the second edge sub-region, the coated sub-region, the uncoated sub-region, the coated sub-region, the uncoated sub-region, and a coated sub-region in sequence.

The second region of interest a1 and the third region of interest b1 form a pair of regions of interest; the second region of interest a2 and the third region of interest b2 form a pair of regions of interest; the second region of interest a3 and the third region of interest b3 form a pair of regions of interest; the second region of interest a4 and the third region of interest b4 form a pair of regions of interest; the second region of interest a5 and the third region of interest b5 form a pair of regions of interest; the second region of interest a6 and the third region of interest b6 form a pair of regions of interest.

For example, as shown in FIG. 8, assume that 6 pairs of regions of interest are included. In step 1, the widths of the second regions of interest and the third regions of interest are obtained. The width of the second region of interest a1 is denoted as La1, and the width of the corresponding third region of interest b1 is denoted as Lb1; the width of the second region of interest a2 is denoted as La2, and the width of the corresponding third region of interest b2 is denoted as Lb2; the width of the second region of interest a3 is denoted as La3, and the width of the corresponding third region of interest b3 is denoted as Lb3; the width of the second region of interest a4 is denoted as La4, and the width of the corresponding third region of interest b4 is denoted as Lb4; the width of the second region of interest a5 is denoted as La5, and the width of the corresponding third region of interest b5 is denoted as Lb5; the width of the second region of interest a6 is denoted as La6, and the width of the corresponding third region of interest b6 is denoted as Lb6.

In step 2, a third width difference of each pair of regions of interest in the region pair is obtained by using the following formula:

$$Nbn = LA/LB * Lbn - Lan$$

where Nbn denotes the third width difference of the pair of regions of interest; LA denotes the width of the first coating surface (the length in the width direction of the electrode plate); LB denotes the width of the second coating surface; Lbn denotes the width of the second region of interest in the pair of regions of interest; Lan denotes the width of the third region of interest in the pair of regions of interest.

In step 3, a misalignment value of the region pair is determined based on the third width differences of the pairs of regions of interest by using the following formula:

$$Nb = \frac{\sum_{i=1}^{n} Nbn}{n} = \frac{\sum_{i=1}^{n} \left( LA/LB * Lbn - Lan \right)}{n}$$

where Nb denotes the misalignment value of the region pair; LA/LB * Lbn - Lan denotes the third width difference of the pair of regions of interest; n denotes the number of groups of the pair of regions of interest.

With continued reference to FIG. 4, the present application further provides a coating system 40. The coating system 40 includes an unwinding mechanism 41, a first coating mechanism 42, a drying mechanism 43, a second coating mechanism 44, a rewinding mechanism 45, and a visual detection system 50. The visual detection system 50 is capable of performing acquisition of two opposite coating surfaces of an electrode plate to obtain coating images, determining coating misalignment information by using the coating images, and performing deviation correction on at least two of the coating mechanisms of the two coating surfaces and the electrode plate based on the coating misalignment information, so as to enable the coated regions of the two coating surfaces after the deviation correction to be aligned and both located at the standard coating positions on the coating surfaces. The unwinding mechanism 41 is configured to unwind the electrode plate; the first coating mechanism 42 is configured to coat the first coating surface of the unwound electrode plate; the second coating mechanism 44 is disposed behind the first coating mechanism 42 and configured to coat the second coating surface of the electrode plate; the drying mechanism 43 is configured to dry the electrode plate strip coated by the first coating mechanism 42 and the second coating mechanism 44; the rewinding mechanism 45 is configured to rewind the dried electrode plate.

In an embodiment, the drying mechanism 43 includes a first drying mechanism 431 and a second drying mechanism 432. The first drying mechanism 431 is configured to dry the electrode plate coated by the first coating mechanism 42, and the second drying mechanism 432 is configured to dry the electrode plate coated by the second coating mechanism 44.

In an embodiment, the visual detection system 50 further includes a first image acquisition apparatus 51 and a second image acquisition apparatus 52. The first image acquisition apparatus 51 is configured to perform image acquisition on the first coating surface of the electrode plate, and the second image acquisition apparatus 52 is configured to perform image acquisition on the second coating surface of the electrode plate.

In an embodiment, a first deviation correcting mechanism 46 and a second deviation correcting mechanism 47 are further included. The first deviation correcting mechanism 46 is configured to perform deviation correction on the first coating mechanism of the first coating surface of the electrode plate, and the second deviation correcting mechanism 47 is configured to perform deviation correction on the second coating mechanism of the second coating surface of the electrode plate.

If the technical solutions of the present application relate to personal information, before the product applying the technical solutions of the present application processes the personal information, individuals have been clearly informed of the personal information processing rules, and their voluntary consent has been obtained. If the technical solutions of the present application relate to sensitive personal information, before the product applying the technical solutions of the present application processes the sensitive personal information, individual's separate consent has been obtained, and at the same time, the requirements of "explicit consent" have been met. For example, at a personal information collection device such as a camera, a clear and conspicuous notice is provided to inform individuals that they have entered the scope of personal information collection and that the personal information will be collected. If individuals voluntarily enter the collection scope, they shall be deemed to have consented to the collection of their personal information. Alternatively, on a personal information processing device, in the case that individuals have been informed of the personal information processing rules by using a conspicuous identifier/information, individual authorization is obtained by means of a pop-up message, by voluntarily uploading personal information by the individuals, or by other means. The personal information processing rules may include information such as personal information processors, purposes of personal information processing, processing methods, and types of personal information processed.

The above descriptions are merely embodiments of the present application and do not thereby limit the patent scope of the present application. Any equivalent structures or equivalent process changes made based on the content of the specification and drawings of the present application, or any direct or indirect application in other related technical fields, shall likewise be included within the scope of patent protection of the present application.

**Claims**

1. A method for electrode plate coating deviation correction, the method comprising:

    obtaining coating images acquired from two opposite coating surfaces of an electrode plate;
    determining, by using the coating images, coating misalignment information, wherein the coating misalignment information characterizes misalignment of coated regions on the coating surfaces, the coating misalignment information comprises first misalignment information, and the first misalignment information characterizes misalignment between a coated region on one of the coating surfaces and a standard coating position on the coating surface; and
    performing, based on the coating misalignment information, deviation correction on at least two of coating mechanisms of the two coating surfaces and the electrode plate, so as to enable coated regions on the two coating surfaces after the deviation correction to be aligned and both located at standard coating positions on the coating surfaces.

2. The method according to claim 1, wherein the coating misalignment information comprises the first misalignment information and a piece of second misalignment information, or comprises two pieces of the first misalignment information;
    the second misalignment information characterizes misalignment between the coated regions on the two coating surfaces.

3. The method according to claim 1, wherein there is at least one piece of the coating misalignment information;
    performing, based on the coating misalignment information, the deviation correction on the at least two of the coating mechanisms of the two coating surfaces and the electrode plate comprises:

    determining, based on each piece of the coating misalignment information, a respective deviation correction value corresponding to the piece of the coating misalignment information; and
    performing, by using the respective deviation correction value corresponding to the piece of the coating misalignment information, the deviation correction on the at least two of the coating mechanisms of the two coating surfaces and the electrode plate.

4. The method according to claim 3, wherein the two coating surfaces comprise a first coating surface and a second coating surface, the coating misalignment information comprises the first misalignment information and second misalignment information, the first misalignment information characterizes misalignment between a coated region on the first coating surface and a standard coating position on the first coating surface, and the second misalignment information characterizes misalignment between the coated regions on the two coating surfaces; and
    determining, based on each piece of the coating misalignment information, the respective deviation correction value corresponding to the piece of the coating misalignment information comprises:

    determining, based on the first misalignment information, a first deviation correction value corresponding to the first misalignment information, and determining, based on the second misalignment information, a second deviation correction value corresponding to the second misalignment information;
    performing, by using the respective deviation correction value corresponding to the piece of the coating misalignment information, the deviation correction on the at least two of the coating mechanisms of the two coating surfaces and the electrode plate comprises:

performing, according to the first deviation correction value, a first deviation correction on a first coating mechanism of the first coating surface, so as to enable a coated region on the first coating surface formed after the first deviation correction to be located at the standard coating position; and

performing, by using the first deviation correction value and the second deviation correction value, a second deviation correction on a second coating mechanism of the second coating surface, so as to enable a coated region on the second coating surface formed after the second deviation correction to be located at the standard coating position and be aligned with the coated region on the first coating surface.

5. The method according to claim 4, wherein performing, by using the first deviation correction value and the second deviation correction value, the second deviation correction on the second coating mechanism of the second coating surface comprises:

before the first deviation correction is performed on the first coating mechanism of the first coating surface, performing, according to the second deviation correction value, a third deviation correction on the second coating mechanism, so as to enable a coated region on the first coating surface formed after the third deviation correction to be aligned with the coated region on the second coating surface; and performing, according to the first deviation correction value, a fourth deviation correction on the second coating mechanism, so as to enable a coated region on the second coating surface formed after the fourth deviation correction to be located at the standard coating position; or

obtaining a sum of the first deviation correction value and the second deviation correction value as a third deviation correction value, and performing, according to the third deviation correction value, the second deviation correction on the second coating mechanism.

6. The method according to claim 5, wherein the step of performing the fourth deviation correction on the second coating mechanism and the step of performing the first deviation correction on the first coating mechanism of the first coating surface are separately performed at an interval of a target time, and the target time is time required by movement of the electrode plate for a distance between the first coating mechanism and the second coating mechanism during coating;

and/or, in a case that the first coating mechanism is disposed in front of the second coating mechanism, the step of performing the fourth deviation correction on the second coating mechanism is performed after the first deviation correction is performed on the first coating mechanism of the first coating surface; in a case that the first coating mechanism is disposed behind the second coating mechanism, the step of performing the fourth deviation correction on the second coating mechanism is performed before the first deviation correction is performed on the first coating mechanism of the first coating surface;

and/or, the coating images comprise a coating image obtained by acquisition of the first coating surface by using a first image acquisition apparatus and a coating image obtained by acquisition of the second coating surface by using a second image acquisition apparatus, and the first misalignment information and the second misalignment information are obtained by analyzing a coating surface with a preset length in the coating images; acquisition of a coating image for determining next first misalignment information is performed after the electrode plate moves a second distance following the first deviation correction, and acquisition of a coating image for determining next second misalignment information is performed after the electrode plate moves a third distance following the third deviation correction, wherein the second distance is a sum of the preset length and a distance by which the electrode plate moves from the first coating mechanism to the first image acquisition device during the coating, and the third distance is a sum of the preset length and a distance by which the electrode plate moves from a target coating mechanism to a target image acquisition device during the coating, the target coating mechanism being a coating mechanism of the first coating mechanism and the second coating mechanism, located at a rear position, and the target image acquisition apparatus being an image acquisition apparatus of the first image acquisition apparatus and the second image acquisition apparatus, located at a front position.

7. The method according to claim 4, wherein the first misalignment information comprises a first misalignment value with respect to a first coated region in at least one first detection region arranged in a length direction of the electrode plate on the first coating surface, the first misalignment value characterizes a positional deviation between the first coated region and the standard coating position, and a number of first misalignment values of each of the first detection regions is one or more; determining, based on the first misalignment information, the first deviation correction value corresponding to the first misalignment information comprises:

for each of the first detection regions, using a measure of central tendency of the first misalignment values of the first detection region as a first candidate deviation correction value of the first detection region; and

statistically processing the first candidate deviation correction value of each of the first detection regions to obtain the first deviation correction value corresponding to the first misalignment information;

the second misalignment information comprises a second misalignment value of at least one region pair, each of the region pairs comprises a second detection region of the first coating surface and a corresponding third detection region on the second coating surface, the second misalignment value characterizes a positional deviation between a second coated region in the second detection region and a second coated region in the third detection region, and a number of second misalignment values of each of the region pairs is one or more; determining, based on the second misalignment information, the second deviation correction value corresponding to the second misalignment information comprises:

for each of the region pairs, using a measure of central tendency of the second misalignment values of the region pair as a second candidate deviation correction value of the region pair; and statistically processing the second candidate deviation correction value of each of the region pairs to obtain the second deviation correction value corresponding to the second misalignment information.

8. The method according to claim 3, wherein after determining, based on each piece of the coating misalignment information, the respective deviation correction value corresponding to the piece of the coating misalignment information, the method further comprises:
for the respective deviation correction value corresponding to the piece of the coating misalignment information, performing an alarm-related operation in response to the deviation correction value being greater than an alarm threshold; and/or discarding the deviation correction value in response to the deviation correction value being less than a deviation correction lower limit value, wherein after the deviation correction value is discarded, corresponding deviation correction is not performed, and the alarm threshold is greater than the deviation correction lower limit value.

9. The method according to claim 2 or 4, wherein determining, by using the coating images, the coating misalignment information comprises:

determining, from the coating images, at least one first detection region, and obtaining a first positional deviation of a first coated region in each of the first detection regions as the first misalignment information, wherein the at least one first detection region is at least one region arranged in a length direction of the electrode plate on the coating surface, and the first positional deviation characterizes a deviation between the first coated region and a standard coating position on a corresponding coating surface; and

determining, from the coating images, at least one second detection region and at least one corresponding third detection region, so as to form at least one region pair, and obtaining a second positional deviation of each of the region pairs as the second misalignment information, wherein each region pair comprises a second detection region and a third detection region, the at least one second detection region is at least one region arranged in the length direction of the electrode plate on the first coating surface of the two coating surfaces, the at least one third detection region is at least one region arranged in the length direction of the electrode plate on the second coating surface of the two coating surfaces, and the second positional deviation characterizes a positional deviation between a second coated region in the second detection region and a third coated region in the second detection region in the region pair.

10. The method according to claim 9, wherein obtaining the first positional deviation of the first coated region in each of the first detection regions as the first misalignment information comprises:

for each of the first detection regions, obtaining widths of first regions of interest on both sides of the first detection region, wherein the first detection region comprises a plurality of first sub-regions arranged in a width direction of the electrode plate, each of the first regions of interest comprises at least one adjacent first sub-region, and the at least one first sub-region comprises an uncoated sub-region located at an edge of the first detection region; and obtaining half of a first width difference between the first regions of interest on both sides as the first misalignment value corresponding to the first detection region, or obtaining half of second width differences between current widths of two first regions of interest and corresponding standard widths as the first misalignment value corresponding to the first detection region.

11. The method according to claim 10, wherein the step of obtaining the half of the first width difference between the first regions of interest on both sides as the first misalignment value corresponding to the first detection region is performed in a case that the electrode plate is configured to prepare a double-tab electrode plate;
the step of obtaining the half of the second width differences between the current widths of the two first regions of interest and the corresponding standard widths as the first misalignment value corresponding to the first detection region is performed in a case that the electrode plate is configured to prepare a single-tab electrode plate.

12. The method according to claim 10, wherein before performing, based on the coating misalignment information, the deviation correction on the at least two of the coating mechanisms of the two coating surfaces and the electrode plate, the method further comprises:

in a case that the misalignment value corresponding to the first detection region comprises the half of the second width differences corresponding to the two first regions of interest in the first detection region, performing preset alarm processing in response to the two second width differences corresponding to the first detection region meeting an alarm condition, and discarding the second width differences corresponding to the first detection region, wherein the discarded second width differences are not used to determine a deviation correction value, and the alarm condition is that a sum of absolute values of the two second width differences corresponding to the first detection region is greater than a preset difference, and the widths of the first regions of interest on both sides of the first detection region are both less than the corresponding standard width or both greater than the corresponding standard width.

13. The method according to claim 9, wherein obtaining the second positional deviation of each of the region pairs as the second misalignment information comprises:

for each of the region pairs, obtaining a third width difference between a second region of interest in the second detection region and a corresponding third region of interest in the third detection region in the region pair as a second misalignment value of the region pair, wherein the second detection region and the third detection region each comprise a plurality of second sub-regions arranged in a width direction of the electrode plate, the second region of interest and the third region of interest each comprise at least one adjacent second sub-region, and the at least one second sub-region comprises an uncoated sub-region located at an edge of the second detection region or the third detection region.

14. The method according to claim 13, wherein obtaining the third width difference between the second region of interest in the second detection region and the corresponding third region of interest in the third detection region in the region pair as the second misalignment value of the region pair comprises:

determining a plurality of second regions of interest in the second detection region and a corresponding plurality of third regions of interest in the third detection region, wherein the second regions of interest each comprise a different number of second sub-regions and each comprise a first edge sub-region, the first edge sub-region is an uncoated sub-region located at the edge of the second detection region, the third regions of interest each comprise a different number of second sub-regions and each comprise a second edge sub-region, the second edge sub-region is an uncoated sub-region located at the edge of the third detection region, and each of the second regions of interest and a corresponding third region of interest form a pair of regions of interest; and obtaining a third width difference of each of the pairs of regions of interest in the region pair as a misalignment value of the region pair.

15. The method according to claim 2 or 4, wherein obtaining the coating images acquired from the two opposite coating surfaces of the electrode plate comprises:

obtaining a first coating image acquired from the first coating surface of the two coating surfaces, and obtaining a second coating image acquired from the first coating surface and a third coating image acquired from the second coating surface of the two coating surfaces, wherein the first coating image and the second coating image are acquired by a first image acquisition apparatus at a same time or different times, the third coating image is acquired by a second image acquisition apparatus, the first coating image is used to determine the first misalignment information, and the second coating image and the third coating image are used to determine the second misalignment information;
before determining, by using the coating images, the coating misalignment information, the method further comprises:
aligning, by using a distance between the first image acquisition apparatus and the second image acquisition apparatus, the second coating image with the third coating image.

16. A coating system, the coating system comprising:

an unwinding mechanism, configured to unwind an electrode plate;
a first coating mechanism, configured to coat a first coating surface of the unwound electrode plate;

a second coating mechanism, disposed behind the first coating mechanism and configured to coat a second coating surface of the electrode plate;

a drying mechanism, configured to dry the electrode plate coated by the first coating mechanism and the second coating mechanism;

a rewinding mechanism, configured to rewind the dried electrode plate; and

a visual detection system, wherein the visual detection system is capable of performing acquisition of two opposite coating surfaces of the electrode plate to obtain coating images, determining coating misalignment information by using the coating images, and performing deviation correction on at least two of the coating mechanisms of the two coating surfaces and the electrode plate based on the coating misalignment information, so as to enable coated regions on the two coating surfaces after the deviation correction to be aligned and both located at standard coating positions on the coating surfaces, wherein the coating misalignment information comprises first misalignment information, and the first misalignment information characterizes misalignment between a coated region on a coating surface and a standard coating position on the coating surface.

17. The system according to claim 16, wherein

the visual detection system comprises a first image acquisition apparatus and a second image acquisition apparatus, the first image acquisition apparatus is configured to perform image acquisition on the first coating surface of the electrode plate, and the second image acquisition apparatus is configured to perform image acquisition on the second coating surface of the electrode plate.

18. The system according to claim 16, wherein

the coating system further comprises a first deviation correcting mechanism and a second deviation correcting mechanism, the first deviation correcting mechanism is configured to perform deviation correction on the first coating mechanism of the first coating surface of the electrode plate, and the second deviation correcting mechanism is configured to perform deviation correction on the second coating mechanism of the second coating surface of the electrode plate.

Obtain coating images acquired from two opposite coating surfaces of an electrode plate — S11

Determine coating misalignment information by using the coating images — S12

Perform deviation correction on at least two of coating mechanisms of the two coating surfaces and the electrode plate based on the coating misalignment information, so as to enable coated regions on the two coating surfaces after the deviation correction to be aligned and both located at standard coating positions on the coating surfaces — S13

FIG. 1

| | | |
|---|---|---|
| Ljs1 | Q1 | Lje1 |
| Ljs2 | Q2 | Lje2 |
| Ljs3 | Q3 | Lje3 |
| Ljs4 | Q4 | Lje4 |

L

Ljs

Lje

FIG. 2

FIG. 3

FIG. 4

FIG. 5

Determine a respective deviation correction value corresponding to the piece of coating misalignment information based on each piece of coating misalignment information

~ S61

Perform deviation correction on the at least two of the coating mechanisms of the two coating surfaces and the electrode plate by using the respective deviation correction value corresponding to the piece of coating misalignment information

~ S62

FIG. 6

L

Q1

Q2

Q3

Q4

FIG. 7

For each first detection region, obtain the widths of first regions of interest on both sides of the first detection region

~ S81

Obtain half of a first width difference between the first regions of interest on both sides as a first misalignment value corresponding to the first detection region, or obtain a second width difference between a current width of each first region of interest and a standard width of the first region of interest as the first misalignment value corresponding to the first detection region

~ S82

FIG. 8

FIG. 9

## INTERNATIONAL SEARCH REPORT

| | International application No. |
|---|---|
| | **PCT/CN2024/094770** |

**A.    CLASSIFICATION OF SUBJECT MATTER**

B05C13/02(2006.01)i;    B65H23/032(2006.01)i;    B05C11/10(2006.01)i;    B05C9/14(2006.01)i;    B05C9/04(2006.01)i

According to International Patent Classification (IPC) or to both national classification and IPC

**B.    FIELDS SEARCHED**

Minimum documentation searched (classification system followed by classification symbols)

IPC: B05C B65H

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT: 宁德时代, 纠偏, 涂, 两面, 正面, 反面, 双面, 预设, 标准, 目标, 图像, 对齐, coat+, rectify, image, align+

**C.    DOCUMENTS CONSIDERED TO BE RELEVANT**

| Category* | Citation of document, with indication, where appropriate, of the relevant passages | Relevant to claim No. |
|---|---|---|
| PX | CN 117339842 A (CONTEMPORARY AMPEREX TECHNOLOGY CO., LTD.) 05 January 2024 (2024-01-05)<br>claims 1-18 | 1-18 |
| X | CN 111495702 A (SUZHOU LINWEI NEW ENERGY TECHNOLOGY CO., LTD. et al.) 07 August 2020 (2020-08-07)<br>description, paragraphs [0002]-[0066], and figures 1-3 | 1-4, 8, 15-18 |
| X | CN 112916327 A (SVOLT ENERGY TECHNOLOGY CO., LTD.) 08 June 2021 (2021-06-08)<br>description, paragraphs [0002]-[0042], and figures 1-3 | 1-3, 8, 15-18 |
| X | CN 116899837 A (CONTEMPORARY AMPEREX TECHNOLOGY CO., LTD.) 20 October 2023 (2023-10-20)<br>description, paragraphs [0002]-[0136], and figures 1-14 | 1-3, 8, 15-18 |
| A | JP 2002273309 A (ISHIKAWAJIMA-HARIMA HEAVY INDUSTRIES CO., LTD.) 24 September 2002 (2002-09-24)<br>entire document | 1-18 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 July 2024** | **24 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094770**

| Patent document cited in search report | | | Publication date (day/month/year) | Patent family member(s) | Publication date (day/month/year) |
|---|---|---|---|---|---|
| CN | 117339842 | A | 05 January 2024 | None | |
| CN | 111495702 | A | 07 August 2020 | None | |
| CN | 112916327 | A | 08 June 2021 | None | |
| CN | 116899837 | A | 20 October 2023 | None | |
| JP | 2002273309 | A | 24 September 2002 | None | |

Form PCT/ISA/210 (patent family annex) (July 2022)

**REFERENCES CITED IN THE DESCRIPTION**

**Patent documents cited in the description**

- CN 2023116562898